(19) Europäisches Patentamt European Patent Office Office européen des brevets

(11) **EP 4 451 737 A1**

(12) **EUROPEAN PATENT APPLICATION**
published in accordance with Art. 153(4) EPC

(43) Date of publication:
**23.10.2024 Bulletin 2024/43**

(21) Application number: **22918344.7**

(22) Date of filing: **09.12.2022**

(51) International Patent Classification (IPC):
***H04W 28/12*** (2009.01)

(52) Cooperative Patent Classification (CPC):
**H04W 28/12; H04W 74/00; H04W 74/08**

(86) International application number:
**PCT/CN2022/137772**

(87) International publication number:
**WO 2023/130894 (13.07.2023 Gazette 2023/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.01.2022 CN 202210005413**

(71) Applicant: **Huawei Technologies Co., Ltd.**
**Shenzhen, Guangdong 518129 (CN)**

(72) Inventors:
• **MAO, Yingchao**
  **Shenzhen, Guangdong 518129 (CN)**
• **CHANG, Junren**
  **Shenzhen, Guangdong 518129 (CN)**
• **GUO, Yinghao**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57) This application provides a communication method and apparatus. The method may be applied to a small data transmission procedure. The method includes: A terminal device receives first indication information from a network device, where the first indication information indicates timing advance information. The terminal device performs the following operations based on a running state of at least one of a first time alignment timer and a second time alignment timer: applying the first indication information or ignoring the first indication information. This method can improve small data transmission efficiency.

FIG. 4(a)

## Description

This application claims priority to Chinese Patent Application No. 202210005413.3, filed with the China National Intellectual Property Administration on January 4, 2022 and entitled "COMMUNICATION METHOD AND APPARATUS", which is incorporated herein by reference in its entirety.

## TECHNICAL FIELD

Embodiments of this application relate to the field of communication technologies, and in particular, to a communication method and apparatus.

## BACKGROUND

A terminal device in a radio resource control (radio resource control, RRC) inactive (inactive) state supports small data transmission (small data transmission, SDT). The SDT includes random access (random access, RA)-based small data transmission (that is, RA-SDT) and configured grant (configured grant, CG)-based small data transmission (that is, CG-SDT). In an SDT procedure, the terminal device needs to maintain uplink timing alignment, to ensure that data can be successfully sent.

In a legacy SDT procedure, transmission efficiency is low. Therefore, how to improve SDT efficiency becomes an urgent problem to be resolved.

## SUMMARY

This application provides a communication method and apparatus. The method may be applied to a small data transmission procedure, and can improve small data transmission efficiency.

According to a first aspect, a communication method is provided. The communication method may be applied to a small data transmission procedure. For example, the communication method may be applied to a configured grant small data transmission procedure. The method includes: A terminal device receives first indication information from a network device, where the first indication information indicates timing advance information. The terminal device performs the following operations based on a running state of at least one of a first time alignment timer and a second time alignment timer: applying the first indication information or ignoring the first indication information.

The first indication information indicates the timing advance information, and a representation form of the first indication information is not specifically limited. For example, the first indication information may be an index value. For another example, the first indication information may alternatively be an adjustment amount. For still another example, the first indication information may alternatively be a timing advance value. That the terminal device ignores the first indication information is not specifically limited. For example, that the terminal device ignores the first indication information may indicate that the terminal device deletes the first indication information. For another example, that the terminal device ignores the first indication information may alternatively indicate that the terminal device does not delete the first indication information, and the terminal device does not apply the first indication information either. For another example, that the terminal device ignores the first indication information may alternatively indicate that after the terminal device receives the first indication information, the terminal device first stores the first indication information (in this case, the terminal device does not apply the first indication information), and then the terminal device applies the first indication information after the first indication information is stored for a period of time. For another example, that the terminal device ignores the first indication information may alternatively indicate that the terminal device continues to maintain a timing advance value maintained by the terminal device before the terminal device receives the first indication information. The terminal device applies the first indication information. To be specific, the terminal device applies the first indication information to update the timing advance value currently maintained by the terminal device, that is, replaces the timing advance value currently maintained by the terminal device with a timing advance value indicated by the first indication information.

This technical solution may be applied to a small data transmission procedure. After the terminal device receives the first indication information, the terminal device determines, based on running states of the two time alignment timers, to apply the first indication information or ignore the first indication information. In this method, a timing advance value used by the terminal device in a small data transmission procedure (that is, uplink transmission) can be adjusted more accurately, so that a success rate of uplink transmission can be improved, and small data transmission (that is, uplink transmission efficiency) efficiency can be improved.

In a possible design, the first time alignment timer is for timing advance maintenance in a configured grant small data transmission procedure, or the first time alignment timer is for maintenance of a configured grant resource.

Optionally, the first time alignment timer is for timing advance maintenance in a configured grant small data transmission procedure, and/or the first time alignment timer is for maintenance of a configured grant resource.

In another possible design, the first time alignment timer is carried in a radio resource control release message, and the second time alignment timer is a timer configured in system information.

In another possible design, that the terminal device applies the first indication information includes: The terminal device updates a second timing advance value to a first timing advance value, where the second timing advance value is a timing advance that is maintained by the terminal device before the terminal device receives the first indication information and that is for uplink transmission, and the first timing advance value is a timing advance that is determined by the terminal device based on the first indication information and that is for uplink transmission.

That the second timing advance value is a timing advance that is maintained by the terminal device before the terminal device receives the first indication information and that is for uplink transmission may include the following cases: The second timing advance value may be a timing advance value maintained by the terminal device after the terminal device receives the radio resource control release message; the second timing advance value may be a timing advance value maintained by the terminal device after the terminal device receives a timing advance command media access control control element; or the second timing advance value may be a timing advance value maintained by the terminal device in a previous random access procedure of the terminal device.

In another possible design, the terminal device applies the first indication information, and the method further includes: If contention resolution fails, the terminal device updates the first timing advance value to the second timing advance value, where the first timing advance value is the timing advance that is determined by the terminal device based on the first indication information and that is for uplink transmission, and the second timing advance value is the timing advance that is maintained by the terminal device before the terminal device receives the first indication information and that is for uplink transmission.

The terminal device updates the first timing advance value to the second timing advance value, that is, the timing advance value currently maintained by the terminal device is replaced with the timing advance value indicated by the first indication information.

In this technical solution, after the terminal device receives the first indication information, the terminal device applies the first indication information. When contention resolution fails, the terminal device falls back to a previously maintained timing advance value (that is, does not apply the first indication information). This method can improve the small data transmission efficiency.

In another possible design, the second time alignment timer is not running.

Optionally, a terminal device side may maintain a time alignment timer, that is, the second time alignment timer.

Optionally, the terminal device side may maintain two time alignment timers, that is, the second time alignment timer and the first time alignment timer.

That the second time alignment timer is not running may indicate that the second time alignment timer stops running. That the second time alignment timer is not running may alternatively indicate that the second time alignment timer expires.

In another possible design, that the second time alignment timer is not running includes: The first time alignment timer is not running and the second time alignment timer is not running; or the first time alignment timer is running and the second time alignment timer is not running.

That the first time alignment timer is not running may indicate that the first time alignment timer stops running. That the first time alignment timer is not running may alternatively indicate that the first time alignment timer expires. That the first time alignment timer is running may indicate that the first time alignment timer does not expire.

In another possible design, the terminal device applies the first indication information, and the method further includes: If the first time alignment timer is running, the terminal device restarts the first time alignment timer.

In this technical solution, after the terminal device applies the first indication information to update the timing advance value for uplink transmission, the terminal device may update the first time alignment timer, to facilitate subsequent use.

In another possible design, that the terminal device applies the first indication information based on a running state of at least one of the first time alignment timer and the second time alignment timer includes: When a first condition is met, if contention resolution succeeds, the terminal device applies the first indication information. That a first condition is met includes: The first time alignment timer is running and the second time alignment timer is not running, or the first time alignment timer is running and the second time alignment timer is running.

When the first condition is met may but is not limited to be replaced with any one of the following: when the first condition is met, if the first condition is met, in a case in which the first condition is met, and the first condition is met.

In this technical solution, after the terminal device receives the first indication information, the terminal device may store the first indication information (that is, first ignore the first indication information). When the first condition is met and contention resolution is determined as successful, the terminal device applies the first indication information. This method can improve the small data transmission efficiency.

In another possible design, that the terminal device ignores the first indication information based on a running state of at least one of the first time alignment timer and the second time alignment timer includes: When at least one of the first time alignment timer or the second time alignment timer is running, the terminal device ignores the first indication information.

In another possible design, that at least one of the first time alignment timer or the second time alignment timer is running includes: The first time alignment timer is running and the second time alignment timer is not running, the first time alignment timer is not running and the second time alignment timer is running, or the first time alignment timer is running and the second time alignment timer is running.

In another possible design, the first time alignment timer is running and the second time alignment timer is not running, or the first time alignment timer is running and the second time alignment timer is running, and the method further includes: if contention resolution succeeds, the terminal device applies the first indication information.

That the terminal device applies the first indication information includes: The terminal device determines, based on the first indication information, to update the second timing advance value to the first timing advance value.

In this technical solution, after the terminal device receives the first indication information, the terminal device first ignores the first indication information (that is, the terminal device stores the first indication information and does not apply the first indication information). When it is determined that contention resolution fails, the terminal device applies the first indication information. In other words, in the method, after the terminal device receives the first indication information, the terminal device first ignores the first indication information. When contention resolution succeeds, the terminal device applies the first indication information. This method can improve the small data transmission efficiency.

In another possible design, the method further includes: The terminal device starts or restarts the second time alignment timer.

Optionally, that the terminal device starts or restarts the second time alignment timer includes: If the second time alignment timer is not running, the terminal device starts the second time alignment timer; or if the second time alignment timer is running, the terminal device restarts the second time alignment timer.

An occasion for the terminal device to start or restart the second time alignment timer includes: After the terminal device receives a radio resource control timing advance command or a timing advance command media access control control element, the terminal device starts or restarts the second time alignment timer.

In another possible design, the first indication information is carried in one of the following: a random access response message, a media access control control element, downlink control information, or a radio resource control release message.

In another possible design, the method further includes: The terminal device determines that the first time alignment timer expires, and the terminal device performs the following behavior: first behavior or second behavior, where the first behavior includes at least one of the following: stopping monitoring a physical downlink control channel, considering that a configured grant-based small data transmission procedure fails, or stopping the first time alignment timer; and the second behavior includes monitoring the physical downlink control channel.

The terminal device determines that the first time alignment timer expires, and the terminal device performs the following behavior: the first behavior or the second behavior. In some implementations, the terminal device determines that the first time alignment timer expires, and the terminal device immediately performs the first behavior.

It may be understood that, the terminal device determines that the first time alignment timer expires, and the terminal device performs the following behavior: the first behavior or the second behavior. The method may be applied to an initial transmission procedure of configured grant small data transmission, that is, a procedure from time when the terminal device sends a first uplink message to time when the terminal device receives a response message to the first uplink message. The first time alignment timer and a second timer in the following third aspect may be a same timer.

In this technical solution, the terminal device determines that the first time alignment timer expires. In an implementation, the terminal device performs the first behavior. To be specific, when the first time alignment timer expires, the terminal device performs at least one of the following: stopping monitoring the physical downlink control channel, considering that the configured grant-based small data transmission procedure fails, or stopping the first time alignment timer, so that the terminal device can be prevented from continuing monitoring the physical downlink control channel, and a power consumption increase can be avoided. In another implementation, the terminal device determines that the first time alignment timer expires, and the terminal device performs the second behavior. To be specific, when the first time alignment timer expires, the terminal device continues monitoring the physical downlink control channel for a period of time, so that the terminal device can be prevented from missing a response of the network device to the first uplink message and considers that the entire data transmission procedure fails. This method can also improve the small data transmission efficiency.

In another possible design, if the second time alignment timer is not running, the method further includes: The terminal device starts the second time alignment timer. Alternatively, if the second time alignment timer is running, the method further includes: The terminal device restarts the second time alignment timer.

In another possible design, if the first time alignment timer is not running, the method further includes: The terminal device starts the first time alignment timer. Alternatively, if the first time alignment timer is running, the method further includes: The terminal device restarts the first time alignment timer.

According to a second aspect, a communication apparatus is provided. The communication apparatus is used in a terminal device and includes: a transceiver unit, configured to receive first indication information from a network device, where the first indication information indicates timing advance information; and a processing unit, configured to perform the following operations based on a running state of at least one of a first time alignment timer and a second time alignment timer: applying the first indication information or ignoring the first indication information.

This technical solution may be applied to a small data transmission procedure. After the terminal device receives the first indication information, the terminal device determines, based on running states of the two time alignment timers, to apply the first indication information or ignore the first indication information. In this method, a timing advance value used by the terminal device in a small data transmission procedure (that is, uplink transmission) can be adjusted more accurately, so that a success rate of uplink transmission can be improved, and small data transmission (that is, uplink transmission efficiency) efficiency can be improved.

In a possible design, the first time alignment timer is for timing advance maintenance in a configured grant small data transmission procedure, or the first time alignment timer is for maintenance of a configured grant resource.

Optionally, the first time alignment timer is for timing advance maintenance in a configured grant small data transmission procedure, and/or the first time alignment timer is for maintenance of a configured grant resource.

In another possible design, the first time alignment timer is carried in a radio resource control release message, and the second time alignment timer is a timer configured in system information.

In another possible design, the processing unit is further configured to update a second timing advance value to a first timing advance value, where the second timing advance value is a timing advance that is maintained by the terminal device before the terminal device receives the first indication information and that is for uplink transmission, and the first timing advance value is a timing advance that is determined by the terminal device based on the first indication information and that is for uplink transmission.

In another possible design, the processing unit is configured to apply the first indication information, and the processing unit is further configured to: if contention resolution fails, update the first timing advance value to the second timing advance value, where the first timing advance value is the timing advance that is determined by the terminal device based on the first indication information and that is for uplink transmission, and the second timing advance value is the timing advance that is maintained by the terminal device before the terminal device receives the first indication information and that is for uplink transmission.

In another possible design, the second time alignment timer is not running.

In another possible design, that the second time alignment timer is not running includes: The first time alignment timer is not running and the second time alignment timer is not running; or the first time alignment timer is running and the second time alignment timer is not running.

In another possible design, the processing unit is configured to apply the first indication information, and the processing unit is further configured to restart the first time alignment timer if the first time alignment timer is running.

In another possible design, the processing unit is further configured to: when a first condition is met, if contention resolution succeeds, apply the first indication information. That a first condition is met includes: The first time alignment timer is running and the second time alignment timer is not running, or the first time alignment timer is running and the second time alignment timer is running.

In another possible design, the processing unit is further configured to: when at least one of the first time alignment timer or the second time alignment timer is running, ignore the first indication information.

In another possible design, that at least one of the first time alignment timer or the second time alignment timer is running includes: The first time alignment timer is running and the second time alignment timer is not running, the first time alignment timer is not running and the second time alignment timer is running, or the first time alignment timer is running and the second time alignment timer is running.

In another possible design, the first time alignment timer is running and the second time alignment timer is not running, or the first time alignment timer is running and the second time alignment timer is running, and the processing unit is further configured to: if contention resolution succeeds, apply the first indication information.

In another possible design, the processing unit is further configured to: start or restart the second time alignment timer.

In another possible design, the first indication information is carried in one of the following: a random access response message, a media access control control element, downlink control information, or a radio resource control release message.

In another possible design, the processing unit is further configured to determine that the first time alignment timer expires, and the terminal device performs the following behavior: first behavior or second behavior, where the first behavior includes at least one of the following: stopping monitoring a physical downlink control channel, considering that a configured grant-based small data transmission procedure fails, or stopping the first time alignment timer; and the second behavior includes monitoring the physical downlink control channel.

In another possible design, if the second time alignment timer is not running, the processing unit is further configured to start the second time alignment timer.

Alternatively, if the second time alignment timer is running, the processing unit is further configured to restart the second time alignment timer.

In another possible design, if the first time alignment timer is not running, the processing unit is further configured to start the first time alignment timer. Alternatively, if the first time alignment timer is running, the processing unit is further configured to restart the first time alignment timer.

For content that is not described in detail in the second aspect, refer to the content in the first aspect. Details are not described herein again.

According to a third aspect, a communication method is provided. The method may be applied to a small data transmission procedure. The method includes: A terminal device sends a first uplink message to a network device on a configured grant resource. The terminal device determines that a second timer expires, and the terminal device performs the following behavior: first behavior or second behavior, where the second timer is for timing advance maintenance in a configured grant small data transmission procedure, or the second timer is for maintenance of a configured grant resource, and the first behavior includes at least one of the following: stopping monitoring a physical downlink control channel, considering that a configured grant-based small data transmission procedure fails, or stopping the second timer; and the second behavior includes monitoring the physical downlink control channel.

The terminal device determines that the second timer expires, and the terminal device performs the following behavior: the first behavior or the second behavior. In some implementations, the terminal device determines that the second timer expires, and the terminal device immediately performs the first behavior.

It may be understood that, the terminal device determines that the second timer expires, and the terminal device performs the following behavior: the first behavior or the second behavior. The method may be applied to an initial transmission procedure of configured grant small data transmission, that is, a procedure from time when the terminal device sends a first uplink message to time when the terminal device receives a response message to the first uplink message. The second timer and the first time alignment timer in the first aspect may be a same timer.

In this technical solution, the terminal device determines that the second timer expires. In an implementation, the terminal device performs the first behavior. To be specific, when the second timer expires, the terminal device performs at least one of the following: stopping monitoring the physical downlink control channel, considering that the configured grant-based small data transmission procedure fails, or stopping the second timer, so that the terminal device can be prevented from continuing monitoring the physical downlink control channel, and a power consumption increase can be avoided. This method helps improve small data transmission efficiency. In another implementation, the terminal device determines that the second timer expires, and the terminal device performs the second behavior. To be specific, when the second timer expires, the terminal device continues monitoring the physical downlink control channel for a period of time, so that the terminal device can be prevented from missing a response of the network device to the first uplink message and considers that the entire data transmission procedure fails. This method helps improve the small data transmission efficiency.

In a possible design, the method further includes: The terminal device starts a first timer, where the first timer is a timer for controlling monitoring of the physical downlink control channel. When the first timer expires, if the terminal device has not received the response message to the first uplink message, the terminal device performs the first behavior.

In another possible design, that the terminal device performs the second behavior when the second timer expires includes: When the second timer expires and the first timer does not expire, the terminal device monitors the physical downlink control channel, and receives the response message to the first uplink message.

The response message to the first uplink message may be feedback received by the terminal device from the network device (the feedback may be an explicit acknowledgment message), or may be an implicit feedback of an uplink resource or a downlink assignment scheduled by a network. Optionally, the response message to the first uplink message may also be a timing advance command media access control control element sent by the network device. In another possible design, the response message to the first uplink message does not carry the first indication information, and the first indication information indicates first timing advance adjustment information.

In another possible design, the method further includes: The terminal device receives second indication information from the network device, where the second indication information indicates second timing advance adjustment information. The terminal device applies the second indication information to update a second timing advance value to a first timing advance value, where the second timing advance value is a timing advance that is maintained by the terminal device before the terminal device receives the second indication information and that is for uplink transmission, and the first timing advance value is a timing advance that is determined by the terminal device based on the second indication information and that is for uplink transmission.

In this technical solution, when the response message to the first uplink message received by the terminal device does not carry the first indication information, the terminal device may actively trigger a random access procedure, to obtain the second indication information from the network device, so as to update a timing advance value currently maintained by the terminal device, that is, update the second timing advance value to the first timing advance value.

In another possible design, the second indication information is carried in a random access response.

Optionally, the second indication information may be a timing advance command.

In this embodiment of this application, the first indication information and the second indication information are carried in different messages. For example, the first indication information may be carried in the media access control control element, and the second indication information may be carried in the random access response.

In another possible design, the response message to the first uplink message carries the first indication information, and the method further includes: The terminal device applies the first indication information to update the second timing advance value to a third timing advance value, where the second timing advance value is a timing advance that is maintained by the terminal device before the terminal device receives the first indication information and that is for uplink transmission, and the third timing advance value is a timing advance that is determined by the terminal device based on the first indication information and that is for uplink transmission.

In this technical solution, when the response message to the first uplink message received by the terminal device carries the first indication information, the terminal device may directly update, based on the first indication information, the timing advance value currently maintained by the terminal device, that is, update the second timing advance value to the first timing advance value, thereby helping reduce the power consumption of the terminal device. In another possible design, the first indication information is a timing advance command media access control element.

In another possible design, the method further includes: The terminal device stops the second timer.

Optionally, when the terminal device receives a radio resource control feedback message, the terminal device stops the second timer. The radio resource control feedback message may be but is not limited to one of the following: a radio resource control resume (resume) message, a radio resource control setup (setup) message, a radio resource control release (release) message, and a radio resource control reject (reject) message.

Optionally, the terminal device restarts or starts the second timer at least in the following cases: when the terminal device receives physical uplink shared channel transmission indicated by a configured scheduling radio network temporary identifier (configured scheduling radio network temporary identifier, CS-RNTI) physical downlink control channel (physical downlink control channel, PDCCH), or after each time the terminal device performs configured grant small data transmission.

In another possible design, the method further includes: When the second timer expires, the terminal device releases the configured grant resource.

It should be understood that the method according to any one of the communication method described in the first aspect and the communication method described in the third aspect may be independently used. Optionally, the communication method described in the first aspect and the communication method described in the third aspect may be further combined for use.

According to a fourth aspect, a communication apparatus is provided. The communication apparatus is used in a terminal device and includes: a transceiver unit, configured to send a first uplink message to a network device on a configured grant resource; and a processing unit, configured to determine that a second timer expires, and the processing unit is further configured to perform the following behavior: first behavior or second behavior, where the second timer is for timing advance maintenance in a configured grant small data transmission procedure, or the second timer is for maintenance of a configured grant resource, and the first behavior includes at least one of the following: stopping monitoring a physical downlink control channel, considering that a configured grant-based small data transmission procedure fails, or stopping the second timer; and the second behavior includes monitoring the physical downlink control channel.

In this technical solution, the terminal device determines that the second timer expires. In an implementation, the terminal device performs the first behavior. To be specific, when the second timer expires, the terminal device performs at least one of the following: stopping monitoring the physical downlink control channel, considering that the configured grant-based small data transmission procedure fails, or stopping the second timer, so that the terminal device can be prevented from continuing monitoring the physical downlink control channel, and a power consumption increase can be avoided. This method helps improve small data transmission efficiency. In another implementation, the terminal device determines that the second timer expires, and the terminal device performs the second behavior. To be specific, when the second timer expires, the terminal device continues monitoring the physical downlink control channel for a period of time, so that the terminal device can be prevented from missing a response of the network device to the first uplink message and considers that the entire data transmission procedure fails. This method helps improve the small data transmission efficiency.

In a possible design, the processing unit is further configured to start a first timer, where the first timer is a timer for controlling monitoring of the physical downlink control channel. The processing unit is further configured to: when the first timer expires, if the terminal device has not received the response message to the first uplink message, perform the first behavior.

In another possible design, when the second timer expires, the processing unit is further configured to: when the second timer expires and the first timer does not expire, monitor the physical downlink control channel, and receives the response message to the first uplink message.

In another possible design, the response message to the first uplink message does not carry the first indication information, and the first indication information indicates first timing advance adjustment information.

In another possible design, the transceiver unit is further configured to receive second indication information from the network device, where the second indication information indicates second timing advance adjustment information. The processing unit is further configured to apply the second indication information to update a second timing advance value to a first timing advance value, where the second timing advance value is a timing advance that is maintained by the terminal device before the terminal device receives the second indication information and that is for uplink transmission, and the first timing advance value is a timing advance that is determined by the terminal device based on the second indication information and that is for uplink transmission.

In another possible design, the second indication information is carried in a random access response.

In another possible design, the response message to the first uplink message carries the first indication information, and the processing unit is further configured to apply the first indication information to update the second timing advance value to a third timing advance value, where the second timing advance value is a timing advance that is maintained by the terminal device before the terminal device receives the first indication information and that is for uplink transmission, and the third timing advance value is a timing advance that is determined by the terminal device based on the first indication information and that is for uplink transmission.

In another possible design, the first indication information is a timing advance command media access control element.

In another possible design, the processing unit is further configured to stop the second timer.

In another possible design, the processing unit is further configured to: when the second timer expires, release the configured grant resource.

For content that is not described in detail in the fourth aspect, refer to the content in the third aspect. Details are not described herein again.

According to a fifth aspect, a communication method is provided. The method is applied to a configured grant small data transmission procedure, and includes: A terminal device receives first indication information from a network device, where the first indication information indicates timing advance information. The terminal device performs the following operations based on a state of a second time alignment timer: applying the first indication information or ignoring the first indication information, where the first indication information indicates the timing advance information.

This technical solution may be applied to the small data transmission procedure. The terminal device maintains a time alignment timer, and the terminal device may determine, based on the time alignment timer, a timing advance value for uplink transmission. This method can improve small data transmission efficiency.

In a possible design, the second time alignment timer is for timing advance maintenance in the configured grant small data transmission procedure.

Optionally, the second time alignment timer is further for timing advance maintenance in a random access procedure. The random access procedure indicates a legacy random access procedure.

In another possible design, before the terminal device receives the first indication information from the network device, the method further includes: The terminal device sends a first uplink message to the network device on a configured grant resource, where the configured grant resource is maintained by using a first time alignment timer, and the first time alignment timer is different from the second time alignment timer.

That the configured grant resource is maintained by using a first time alignment timer may be understood as that if the first time alignment timer is running, the terminal device considers that the configured grant resource is valid.

For example, the first time alignment timer may be a time alignment timer in the configured grant small data transmission procedure, and the second time alignment timer may be a time alignment timer in the legacy random access procedure.

In another possible design, the first time alignment timer is carried in a radio resource control release message, and the second time alignment timer is a timer configured in system information.

In another possible design, the method further includes: The terminal device starts the second time alignment timer when initiating this configured grant small data transmission.

Configured duration of the second time alignment timer is not specifically limited. For example, the configured duration of the second time alignment timer may be duration configured for an uplink timing advance maintenance timer of configured grant small data transmission in the radio resource control release message. For another example, the configured duration of the second time alignment timer may be duration configured for a legacy time alignment timer in a system information block (system information block, SIB).

In another possible design, the method further includes: The terminal device receives the first indication information from the network device, and restarts the first time alignment timer.

Optionally, the first indication information is carried in a random access response. For example, the first indication information may be a TAC.

In this technical solution, that the terminal device receives the first indication information from the network device and restarts the first time alignment timer may be understood as that the terminal device restarts the first time alignment timer when applying the first indication information.

In another possible design, that the terminal device performs the following operations based on a state of the second time alignment timer: applying the first indication information or ignoring the first indication information includes: The terminal device determines that the second time alignment timer is not running, and applies the first indication information; or the terminal device determines that the second time alignment timer is running, and ignores the first indication information.

In this implementation, the second time alignment timer may be the time alignment timer in the legacy random access procedure (that is, the second time alignment timer is further for timing advance maintenance in the legacy random access procedure), and the second time alignment timer is further for timing advance maintenance in the configured grant small data transmission procedure. The terminal device determines, based on the state of the second time alignment timer, to apply the first indication information or ignore the first indication information.

Optionally, the second time alignment timer is not running, and the method further includes: The terminal device starts the second time alignment timer.

According to a sixth aspect, a communication method is provided. The communication method is applied to a terminal device, and includes: a transceiver unit, configured to receive first indication information from a network device, where the first indication information indicates timing advance information; and a processing unit, configured to perform the following operations based on a state of a second time alignment timer: applying the first indication information or ignoring the first indication information, where the first indication information indicates the timing advance information.

This technical solution may be applied to a small data transmission procedure. The terminal device maintains a time alignment timer, and the terminal device may determine, based on the time alignment timer, a timing advance value for uplink transmission. This method can improve small data transmission efficiency.

In a possible design, the second time alignment timer is for timing advance maintenance in the configured grant small data transmission procedure.

Optionally, the second time alignment timer is further for timing advance maintenance in a random access procedure. The random access procedure indicates a legacy random access procedure.

In another possible design, the transceiver unit is further configured to send a first uplink message to the network device on a configured grant resource, where the configured grant resource is maintained by using a first time alignment timer, and the first time alignment timer is different from the second time alignment timer. For example, the first time alignment timer may be a time alignment timer in the configured grant small data transmission procedure, and the second time alignment timer may be a time alignment timer in the legacy random access procedure.

That the configured grant resource is maintained by using a first time alignment timer may be understood as that if the first time alignment timer is running, the terminal device considers that the configured grant resource is valid.

In another possible design, the first time alignment timer is carried in a radio resource control release message, and the second time alignment timer is a timer configured in system information.

In another possible design, the processing unit is further configured to start the second time alignment timer when initiating this configured grant small data transmission.

Configured duration of the second time alignment timer is not specifically limited. For example, the configured duration of the second time alignment timer may be duration configured for an uplink timing advance maintenance timer of configured grant small data transmission in the radio resource control release message. For another example, the configured duration of the second time alignment timer may be duration configured for a legacy time alignment timer in a SIB.

In another possible design, the transceiver unit is further configured to receive the first indication information from the network device, and the processing unit is further configured to restart the first time alignment timer.

Optionally, the first indication information is carried in a random access response. For example, the first indication information may be a TAC.

In this technical solution, that the terminal device receives the first indication information from the network device and restarts the first time alignment timer may be understood as that the terminal device restarts the first time alignment timer when applying the first indication information.

In another possible design, the processing unit is further configured to: determine that the second time alignment timer is not running, and apply the first indication information; or determine that the second time alignment timer is running, and ignore the first indication information.

In this implementation, the second time alignment timer may be the time alignment timer in the legacy random access procedure (that is, the second time alignment timer is further for timing advance maintenance in the legacy random access procedure), and the second time alignment timer is further for timing advance maintenance in the configured grant small data transmission procedure. The terminal device determines, based on the state of the second time alignment timer, to apply the first indication information or ignore the first indication information.

Optionally, the second time alignment timer is not running, and the processing unit is further configured to start the second time alignment timer.

According to a seventh aspect, a communication apparatus is provided. The communication apparatus is configured to perform the method according to the first aspect. Specifically, the communication apparatus may include units and/or modules configured to perform the method according to any one of the first aspect or the implementations of the first aspect, for example, a processing unit and/or a communication unit.

In an implementation, the communication apparatus is a terminal device. When the communication apparatus is the terminal device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit in a terminal device. When the communication apparatus is the chip, the chip system, or the circuit in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

For beneficial effect of the method shown in the seventh aspect and the possible designs of the seventh aspect, refer to the beneficial effect in the first aspect and the possible designs of the first aspect.

According to an eighth aspect, a communication apparatus is provided. The communication apparatus is configured to perform the method according to the third aspect. Specifically, the communication apparatus may include units and/or modules configured to perform the method according to any one of the third aspect or the implementations of the third aspect, for example, a processing unit and/or a communication unit.

In an implementation, the communication apparatus is a network device. When the communication apparatus is the network device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit in a network device. When the communication apparatus is the chip, the chip system, or the circuit in the network device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

For beneficial effect of the method shown in the eighth aspect and the possible designs of the eighth aspect, refer to the beneficial effect in the third aspect and the possible designs of the third aspect.

According to a ninth aspect, a communication apparatus is provided. The communication apparatus is configured to perform the method according to the fifth aspect. Specifically, the communication apparatus may include units and/or modules configured to perform the method according to any one of the fifth aspect or the implementations of the fifth aspect, for example, a processing unit and/or a communication unit.

In an implementation, the communication apparatus is a network device. When the communication apparatus is the network device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit in a network device. When the communication apparatus is the chip, the chip system, or the circuit in the network device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a tenth aspect, a communication apparatus is provided. The communication apparatus includes at least one processor, and the at least one processor is coupled to at least one memory. The at least one memory is configured to store a computer program or instructions, and the at least one processor is configured to invoke the computer program or the instructions from the at least one memory and run the computer program or the instructions, so that the communication apparatus is enabled to perform the method according to any one of the first aspect or the possible implementations of the first aspect.

In an implementation, the apparatus is a terminal device.

In another implementation, the apparatus is a chip, a chip system, or a circuit in a terminal device.

For beneficial effect of the method shown in the tenth aspect and the possible designs of the tenth aspect, refer to the beneficial effect in the first aspect and the possible designs of the first aspect.

According to an eleventh aspect, a communication apparatus is provided. The communication apparatus includes at least one processor, and the at least one processor is coupled to at least one memory. The at least one memory is configured to store a computer program or instructions, and the at least one processor is configured to invoke the computer program or the instructions from the at least one memory and run the computer program or the instructions, so that the communication apparatus is enabled to perform the method according to any one of the third aspect or the possible implementations of the third aspect.

In an implementation, the apparatus is a network device.

In another implementation, the communication apparatus is a chip, a chip system, or a circuit in a network device.

For beneficial effect of the method shown in the eleventh aspect and the possible designs of the eleventh aspect, refer to the beneficial effect in the third aspect and the possible designs of the third aspect.

According to a twelfth aspect, a communication apparatus is provided. The communication apparatus includes at least one processor, and the at least one processor is coupled to at least one memory. The at least one memory is configured to store a computer program or instructions, and the at least one processor is configured to invoke the computer program or the instructions from the at least one memory and run the computer program or the instructions, so that the communication apparatus is enabled to perform the method according to any one of the fifth aspect or the possible implementations of the fifth aspect.

In an implementation, the apparatus is a network device.

In another implementation, the communication apparatus is a chip, a chip system, or a circuit in a network device.

For beneficial effect of the method shown in the eleventh aspect and the possible designs of the eleventh aspect, refer to the beneficial effect in the fifth aspect and the possible designs of the fifth aspect.

According to a thirteenth aspect, this application provides a processor, configured to perform the method provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a fourteenth aspect, a computer-readable storage medium is provided. The computer-readable storage medium stores program code executed by a device, and the program code is used to perform the method according to any one of the first aspect or the implementations of the first aspect, the third aspect or the implementations of the third aspect, or the fifth aspect or the implementations of the fifth aspect.

According to a fifteenth aspect, a computer program product including instructions is provided. When the computer program product runs on a computer, the computer is enabled to perform the method according to any one of the first aspect or the implementations of the first aspect, the third aspect or the implementations of the third aspect, or the fifth aspect or the implementations of the fifth aspect.

According to a sixteenth aspect, a chip is provided. The chip includes a processor and a communication interface. The processor reads, through the communication interface, instructions stored in a memory, to perform the method according to any one of the first aspect or the implementations of the first aspect, the third aspect or the implementations of the third aspect, or the fifth aspect or the implementations of the fifth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the first aspect or the implementations of the first aspect, the third aspect or the implementations of the third aspect, or the fifth aspect or the implementations of the fifth aspect.

According to a seventeenth aspect, a communication system is provided. The communication system includes at least one of the communication apparatuses according to the second aspect, the fourth aspect, and the sixth aspect.

## BRIEF DESCRIPTION OF DRAWINGS

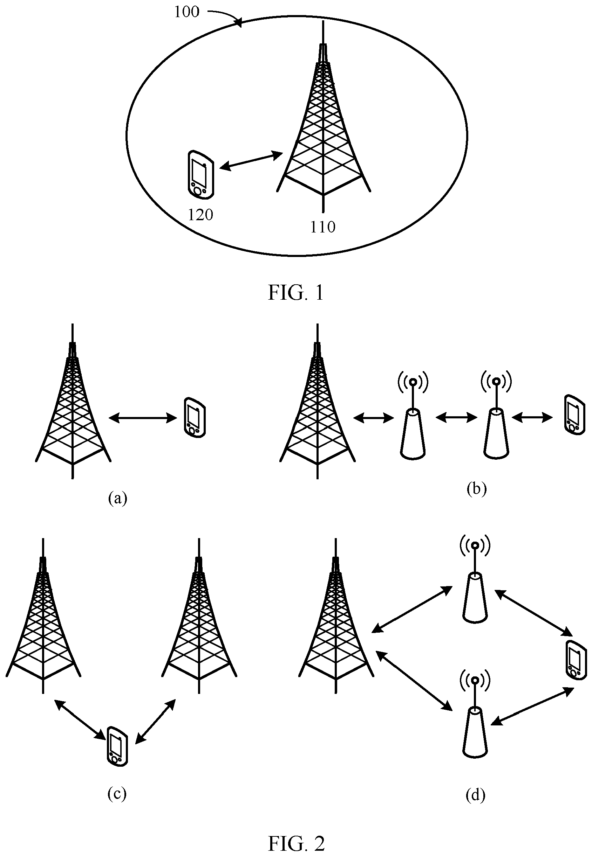

FIG. 1 is a diagram of a communication system 100 to which embodiments of this application are applicable;

(a) to (d) in FIG. 2 are diagrams of communication manners between a network device and a terminal device;

FIG. 3(a) is a schematic flowchart of a four-step random access procedure;

FIG. 3(b) is a schematic flowchart of a small data transmission procedure;

FIG. 4(a) is a schematic flowchart of a communication method according to an embodiment of this application;

FIG. 4(b) is a schematic flowchart of another communication method according to an embodiment of this application;

FIG. 5 is a schematic flowchart of a specific embodiment of a communication method according to an embodiment of this application;

FIG. 6 is a schematic flowchart of a specific embodiment of a communication method according to an embodiment of this application;

FIG. 7 is a schematic flowchart of a specific embodiment of a communication method according to an embodiment of this application;

FIG. 8 is a schematic flowchart of a specific embodiment of a communication method according to an embodiment of this application;

FIG. 9A and FIG. 9B are a schematic flowchart of a specific embodiment of a communication method according to an embodiment of this application;

FIG. 10 is a schematic flowchart of a specific embodiment of a communication method according to an embodiment of this application;

FIG. 11 is a block diagram of a communication apparatus 1100 according to an embodiment of this application; and

FIG. 12 is a block diagram of a communication apparatus 1200 according to an embodiment of this application.

## DESCRIPTION OF EMBODIMENTS

The following describes technical solutions of embodiments in this application with reference to accompanying drawings.

The technical solutions in embodiments of this application are applied to various communication systems, for example, a 5th generation (5th generation, 5G) system or new radio (new radio, NR), a long term evolution (long term evolution, LTE) system, an LTE frequency division duplex (frequency division duplex, FDD) system, and LTE time division duplex (time division duplex, TDD). The technical solutions provided in this application may be further applied to a future communication system, for example, a 6th generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

For ease of understanding embodiments of this application, a communication system shown in FIG. 1 is first used as an example to describe in detail the communication system applicable to embodiments of this application. FIG. 1 is a schematic diagram of a communication system 100 to which embodiments of this application are applicable. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 and the terminal device 120 may communicate with each other through a radio link. A plurality of antennas may be configured for each communication device, for example, the network device 110 and the terminal device 120. For each communication device in the communication system 100, the configured plurality of antennas may include at least one transmit antenna configured to send a signal and at least one receive antenna configured to receive a signal. Therefore, the communication devices in the communication system 100, for example, the network device 110 and the terminal device 120, may communicate with each other by using a multi-antenna technology.

As an example rather than a limitation, the network device and the terminal device in a scenario shown in FIG. 1 may communicate with each other in a plurality of manners. For example, the network device and the terminal device communicate with each other in a point-to-point transmission manner, the network device and the terminal device communicate with each other in a multi-hop (or relay (relay)) transmission manner, and a plurality of network devices and the terminal device communicate with each other in a dual connectivity (dual connectivity, DC) or multi-connectivity transmission manner. (a) to (d) in FIG. 2 are diagrams of communication manners between the network device and the terminal device.

(a) in FIG. 2 shows point-to-point transmission between the network device and the terminal device. (b) in FIG. 2 shows multi-hop single-connection transmission between the network device and the terminal device. (c) in FIG. 2 shows dual connectivity transmission between the network device and the terminal device. (d) in FIG. 2 shows multi-hop multi-connectivity transmission between the network device and the terminal device.

It should be noted that FIG. 2 is an example, and constitutes no limitation on the protection scope of this application. A manner of communication between a network device and a terminal device is not limited in embodiments of this application. For example, transmission between the network device and the terminal device may be uplink, downlink, access link, backhaul (backhaul) link, sidelink (sidelink), or other transmission.

A terminal device (terminal equipment) in embodiments of this application may indicate an access terminal, a subscriber unit, a subscriber station, a mobile station, a mobile console, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

As an example rather than a limitation, in embodiments of this application, the wearable device may also be referred to as a wearable intelligent device, and is a general name of a wearable device developed by intelligently designing daily wear through a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, intelligent wearable devices include full-featured and large-size devices that can implement complete or partial functions without depending on smartphones, for example, smart watches or smart glasses, and devices that dedicated to only one type of application and need to be used together with other devices such as smartphones, such as various smart bands or smart jewelry used for monitoring physical signs.

In addition, in embodiments of this application, the terminal device may alternatively be a terminal device in an IoT system. An IoT is an important part of future development of information technologies. A main technical feature of the IoT is connecting a thing to a network by using a communication technology, to implement an intelligent network for interconnection between a person and a machine or between one thing and another thing. In embodiments of this application, an IoT technology may implement massive connections, deep coverage, and terminal power saving by using, for example, a narrowband (narrowband, NB) technology.

A network device in embodiments of this application may be any device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, HeNB, or a home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the device may be a gNB or a transmission point (TRP or TP) in a 5G system such as an NR system, may be one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), and a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

It should be understood that FIG. 1 and FIG. 2 describe an example in which the network device and the terminal device communicate with each other to briefly describe a communication scenario to which this application is applicable, and do not impose a limitation on another scenario to which this application is applicable.

It should be further understood that FIG. 1 and FIG. 2 are merely simplified diagrams of examples for ease of understanding. The communication system may further include another network device or may further include another terminal device, which is not shown in FIG. 1 and FIG. 2.

For example, the communication system may further include a core network device configured to manage configuration of the terminal device and the network device, for example, including an access and mobility management function (access and mobility management function, AMF) network element, a session management function (session management function, SMF) network element, a user plane function (user plane function, UPF) network element, and a policy control function (policy control function, PCF) network element.

FIG. 1 and FIG. 2 show a communication system to which embodiments of this application are applicable. To facilitate understanding of the technical solutions in embodiments of this application, before the solutions in embodiments of this application are described based on a 5G architecture, some 5G terms or concepts that may be used in embodiments of this application are briefly described first.

1. Random access procedure

Random access is a necessary procedure for establishing a radio link between a terminal device and a network. Data interoperations can be normally performed between the network and the terminal device only after the random access is completed.

The random access procedure indicates a procedure from time when the terminal device sends a random access preamble (preamble) to start attempting to access the network to time before a basic signaling connection is established between the terminal device and the network.

The random access procedure may be triggered by different reasons, for example, initial access of UE in a radio resource control (radio resource control, RRC) idle state, an RRC connection reestablishment procedure, uplink or downlink data arrival at a terminal in a connected state while uplink is out of synchronization, uplink data arrival while there is no physical uplink control channel (physical uplink control channel, PUCCH) resource for a scheduling request (scheduling Request, SR), a scheduling request failure, reconfiguration with sync, connection resumption from an inactive state, timing alignment establishment, a request for other system information, beam failure recovery, and an uplink listen before talk (listen before talk, LBT) failure.

The random access may be alternatively triggered when a configured grant (configured grant, CG) resource is used for data transmission, but there is no available synchronization signal and physical broadcast channel block (synchronization signal and PBCH block, SSB) associated with the configured grant resource; may be alternatively triggered when there is no valid timing advance; or may be alternatively triggered when there is no resource for a scheduling request.

It should be noted that before the terminal device selects a random access channel occasion (RACH occasion, RO) for sending the preamble, the terminal device needs to select an uplink carrier. For example, when a supplementary uplink (supplementary uplink, SUL) or a normal uplink (normal uplink) NUL is configured, the terminal device may select, based on reference signal received power (reference signal received power, RSRP), whether to operate on the SUL or the NUL.

After selecting the uplink carrier, the terminal device may need to perform a bandwidth part (bandwidth part, BWP) operation. For example, when no RO is configured on an active uplink BWP of the terminal device, the terminal device needs to switch from the active uplink BWP to an initial uplink BWP.

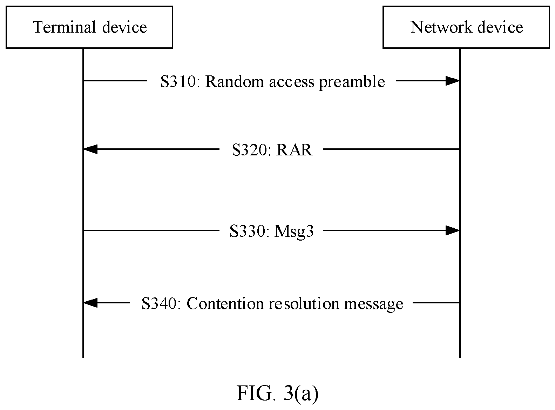

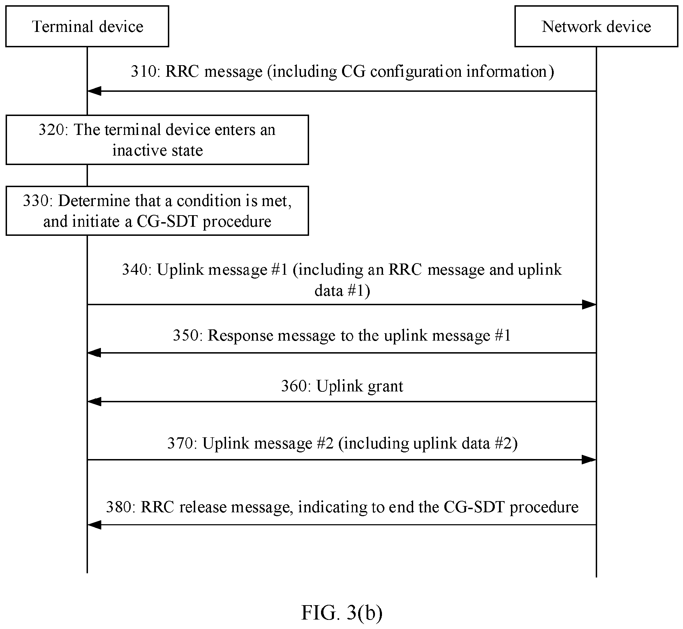

After selecting the uplink carrier or the BWP operation, the terminal device needs to select a random access (random access, RA) type. For example, FIG. 3 shows a four-step random access procedure performed by a terminal device.

Further, after determining an RA type, the terminal device needs to select a RACH resource: The terminal device may select, based on a selected synchronization signal block (synchronization signal and PBCH block, SSB) and a mapping relationship between an SSB and an RO, an RO for sending a preamble; or the terminal device may select, based on the selected SSB and a mapping relationship between an SSB and a preamble, a to-be-sent preamble.

For example, one SSB may correspond to a plurality of ROs, or a plurality of SSBs are mapped to one RO. For another example, one SSB corresponds to one or more preambles, and different SSBs may use different preambles.

The following describes the four-step random access procedure with reference to FIG. 3(a).

FIG. 3(a) is a schematic flowchart of the four-step random access procedure.

It can be seen from FIG. 3(a) that the four-step random access procedure may include the following step:

S310: The terminal device sends a random access preamble to a network device.

For example, the terminal device sends the random access preamble to the network device on a physical random access channel (physical random access channel, PRACH) resource, where the PRACH resource may be understood as a random access channel occasion (RACH occasion, RO).

After sending the random access preamble, the terminal device monitors a random access response message of the network device in a random access response window.

After receiving the random access preamble sent by the terminal device, the network device sends a random access response (random access response, RAR) to the terminal device based on the random access preamble. The random access procedure shown in FIG. 3 further includes the following step:
S320: The network device sends the RAR to the terminal device.

For example, the RAR sent by the network device to the terminal device includes indication information indicating an uplink resource for sending a message 3 (message 3, Msg3). It may be understood that after receiving the RAR, the terminal device can learn of the uplink resource used for sending Msg3.

The RAR further includes a preamble identifier, a timing advance adjustment command, and a temporary identifier (TC-RNTI) of the terminal device. After receiving the RAR, the terminal device sends Msg3 based on the RAR. The random access procedure shown in FIG. 3 further includes the following step:
S330: The terminal device sends Msg3 to the network device.

The terminal device sends data on a corresponding uplink resource through a physical uplink shared channel (physical uplink shared channel, PUSCH) based on uplink grant information indicated in the RAR. The data may include a radio resource control (radio resource control, RRC) message and terminal device identifier information, for example, cell radio network temporary identifier (cell radio network temporary identifier, C-RNTI) information of the terminal device, a resume identifier (resume identifier) of the terminal device, or an inactive radio network temporary identifier (inactive radio network temporary identifier, I-RNTI). The resume ID or the I-RNTI is allocated by a network side to the terminal device, and an identifier reported by the terminal device is used by a base station to identify an identity of the terminal device and related context information or used for other purposes.

For example, Msg3 may include layer 2 (layer 2, L2) information and/or layer 3 (layer 3, L3) information, for example, an RRC connection setup request (RRC Connection Request) message and an RRC connection resume request (RRC Resume Request) message; and for another example, a beam failure recovery (beam failure recovery, BFR) MAC control element (control element, CE).

When contention resolution of the terminal device succeeds, the network device sends a contention resolution message to the terminal device. The random access procedure shown in FIG. 3 further includes the following step:
S340: The network device sends the contention resolution message to the terminal device.

For example, the contention resolution message includes an identifier (identifier, ID) of the terminal device, and the contention resolution message may also be referred to as a message 4 (message 4, Msg4). When it is determined, from Msg3, that the random access is contention-based random access, information about terminal devices that need to contend is stored. When contention is resolved based on the Msg4, contention resolution is performed on these contending terminal devices.

The random access procedure described in FIG. 3(a) may be referred to as a legacy (legacy) RA procedure.

The legacy random access procedure may be understood as that when a network configures information about a resource for random access, including an RO or a preamble, the resource is different from a random access resource for small data transmission.

It should be noted that FIG. 3(a) in this application is merely a diagram provided for ease of describing the four-step random access procedure, and constitutes no limitation on the protection scope of this application. For specific descriptions of the four-step random access procedure, refer to descriptions in current related technologies.

2. Small data transmission (small data transmission, SDT)

That a terminal device in an RRC inactive (inactive) state supports small data transmission may be understood as that the terminal device also sends small data when sending Msg3, and the terminal device can perform small data transmission without entering a connected state, thereby reducing power consumption and a delay. The terminal device in the RRC inactive (inactive) state supports small data transmission. Specifically, random access (random access, RA)-based small data transmission (that is, RA-SDT) is supported, and configured grant (configured grant, CG) type 1 resource-based SDT (i.e., CG-SDT) can be further supported.

The following describes a small data transmission procedure with reference to FIG. 3(b).

FIG. 3(b) is a schematic flowchart of a small data transmission procedure. The small data transmission procedure is a CG-SDT procedure.

It can be seen from FIG. 3(b) that the small data transmission procedure may include the following steps.

Step 310: A network device sends an RRC release (RRC release) message to a terminal device.

The RRC release message may include but is not limited to one or more of the following information: configuration information of a configured grant (configured grant, CG) for small data transmission (small data transmission, SDT), timer information of timing advance maintenance for configured grant transmission, radio bearer (radio bearer, RB) information for SDT, and the like. The message further includes configuration information of a physical layer and a media access control (media access control, MAC) layer for SDT, configuration information of a bandwidth part (bandwidth part, BWP) for CG-SDT, and the like. The configuration information of the configured grant includes but is not limited to one or more of the following information: time domain information, frequency domain information, a periodicity, frequency hopping, and a timer of the configured grant.

The network device performs the step 310. Correspondingly, the terminal device receives the RRC release message. The terminal device receives the RRC release message from the network device, and starts the timer that is configured in the message and that is for timing advance maintenance. The terminal device receives the RRC release message, and the terminal device maintains a current timing advance value of the terminal device. The current timing advance value of the terminal device is understood as a timing advance value currently stored by the terminal device. A source of the timing advance value currently stored by the terminal device is not specifically limited. For ease of description, the timing advance value currently stored by the terminal device is denoted as a TA value #1 in the following.

Step 320: The terminal device enters an RRC inactive (inactive) state.

In the step 320, after the terminal device receives the RRC release message sent by the network device, the terminal device enters the RRC inactive state.

Step 330: The terminal device determines that a condition is met, and initiates a CG-SDT procedure.

That the terminal device determines that a condition is met includes: A CG resource of the terminal device is valid and a TA value is valid.

That the TA is valid may be understood as that a currently measured RSRP change is less than an RSRP-based threshold that is configured by a network and that is for valid timing advance verification.

That the terminal device determines that a condition is met may further include: All uplink data of the terminal device is data corresponding to a bearer (radio bearer, RB) for small data transmission, and the RB includes a data radio bearer (data radio bearer, DRB, DRB) and a signaling radio bearer (signaling radio bearer, SRB).

A total data amount of the uplink data of the terminal device is less than a configured threshold 1, and the threshold 1 is a threshold for determining a data amount of small data transmission in the inactive state.

The reference signal received power (reference signal received power, RSRP) of the terminal device is greater than a configured threshold 2, and the threshold 2 is a threshold for determining reference signal received power or signal quality of small data transmission in the inactive state.

That the terminal device determines that a condition is met may further include: A CG resource is configured on a carrier selected by the terminal device.

The CG resource is a resource used when the terminal device performs uplink transmission, and the CG resource is determined based on a CG configuration in the RRC release message.

After determining that the condition is met, the terminal device initiates the CG-SDT procedure, that is, the procedure described in the following step 330 and step 550.

Step 340: The terminal device sends an uplink message #1 to the network device.

The uplink message #1 includes an RRC resume request message and uplink data #1. Optionally, if the terminal device needs to send uplink data #2 in addition to the uplink data #1. The uplink message #1 may further include assistant information (for example, a buffer status report (buffer status report, BSR) and/or release assistant information (release assistant information, RAI)) of the terminal device. The uplink message #1 may be understood as a first uplink message sent by the terminal device to the network device. After sending the uplink message #1, the terminal device monitors a PDCCH.

The terminal device performs the step 340. Correspondingly, the network device receives the uplink message #1. After receiving the uplink message #1 sent by the terminal device, the network device responds to the uplink transmission of the terminal device.

Step 350: The network device sends a response message to the uplink message #1 to the terminal device.

Correspondingly, the terminal device receives the response message to the uplink message #1.

Optionally, after the step 350, the following step 360 may be further performed.

Step 360: The network device sends an uplink grant to the terminal device.

Correspondingly, the terminal device receives the uplink grant. When the assistant information of the terminal device is indicated to the network device in the step 330, and the terminal device needs to transmit subsequent data, the network device may schedule a grant resource for subsequent transmission in a dynamic scheduling manner.

Step 370: The terminal device sends an uplink message #2 to the network device.

Correspondingly, the network device receives the uplink message #2. The uplink message #2 includes the uplink data #2. The terminal device may send the uplink message #2 to the network device based on the dynamically scheduled resource. Optionally, the terminal device may alternatively use the CG resource to perform subsequent transmission, and send subsequent data on a next available occasion of the CG resource.

Step 380: The network device sends an RRC release message to the terminal device.

Correspondingly, the terminal device receives the RRC release message, where the RRC release message indicates to end the CG-SDT procedure. The RRC release message may carry an inactive radio network temporary identifier (inactive radio network temporary identifier, I-RNTI) and downlink (downlink, DL) data. After the terminal device receives the RRC release message, the terminal device enters the RRC inactive state.

Optionally, before the step 380, the network device may further determine, based on the assistant information of the terminal device in the step 330, that the terminal device does not need to transmit uplink data.

Between the step 330 and the step 370, the terminal device may trigger a random access procedure (for example, the random access procedure shown in FIG. 3(a)).

It should be noted that FIG. 3(b) shown in this application is merely a diagram provided for ease of describing the CG-SDT procedure, and constitutes no limitation on the protection scope of this application. For specific descriptions of the CG-SDT procedure, refer to descriptions in current related technologies.

3. Timing advance (timing advance, TA)

The timing advance is also referred to as a timing advance value or timing advance ($N_{TA}$ for short). TA is usually used for uplink transmission (uplink) of a terminal device, and indicates that uplink data of the terminal device is sent in advance for a corresponding period of time by estimating transmission latency caused by a distance, so that the uplink data arrives at a network device at a desired time point. In other words, $N_{TA}$ indicates a timing advance that is between an uplink and a downlink and that is determined by the terminal device based on a timing adjustment command sent by the network device.

4. Timing advance command (timing advance command, TAC)

A network device sends the TAC to a terminal device, to notify the terminal device of a TA adjustment amount.

5. Timing advance group (timing advance group, TAG)

Cells that use a same timing advance value as a timing reference (timing reference) are grouped into a same TAG.

In a group of serving cells (cells) configured by RRC, a same timing reference and a same timing advance value are used for cells configured with an uplink. A timing advance group includes only cells in a same cell group.

A specific structure of an execution body of a method provided in embodiments of this application is not particularly limited in the following embodiments, provided that a program that records code of the method provided in embodiments of this application can be run to perform communication according to the method provided in embodiments of this application. For example, the execution body of the method provided in embodiments of this application may be a terminal device or an access network device, or a functional module that can invoke and execute the program in the terminal device or the access device.

For ease of understanding of embodiments of this application, the following descriptions are provided.

First, in this application, "indicate" may be understood as "enable", and "enable" may include "directly enable" and "indirectly enable". When a piece of information is described to enable A, the information may directly enable A or indirectly enable A, but it does not mean that the information definitely carries A.

Information enabled by the information is referred to as to-be-enabled information. In a specific implementation process, the to-be-enabled information may be enabled in many manners. For example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, so as to reduce enabling overheads to some extent. In addition, a common part of all information may be identified and enabled in a unified manner, so as to reduce enabling overheads caused by enabling the same information separately.

Second, the first number, the second number, and the like (for example, "#1", "#2", and the like) in this application are merely for ease of description, and for distinguishing objects, but are not intended to limit the scope of embodiments of this application. For example, the terms are used to differentiate between different indication information, but are not for describing a particular order or sequence. It should be understood that the objects described in such a way are interchangeable in a proper circumstance, so that a solution other than embodiments of this application can be described.

Third, in this application, "preset" may include predefined, for example, defined in a protocol. The "predefinition" may be implemented by pre-storing, in a device (for example, a terminal device or a network device), corresponding code, or a table; or by another manner that may be used to indicate related information. A specific implementation of the "pre-definition" is not limited in this application.

Fourth, "being stored" in embodiments of this application may be "being stored in one or more memories". The one or more memories may be separately disposed, or may be integrated into an encoder or a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited in this application.

Fifth, "protocols" in embodiments of this application may be standard protocols in the communication field, for example, may include a 5G protocol, a new radio (new radio, NR) protocol, and a related protocol applied to a future communication system. This is not limited in this application.

Sixth, in this application, that a terminal device in an inactive (inactive) state performs a subsequent CG-SDT procedure is understood as one of the following:

(1) It is understood that data buffered at a terminal device side is a larger amount of data than that can be accommodated by a first uplink grant of random access or configured grant transmission. In this case, the terminal device needs to segment the data. For segmented data, remaining data after the first uplink grant is sent is subsequent data.
(2) It is alternatively understood that in a current SDT data transmission procedure, new SDT data of the terminal device arrives, and the data may also be referred to as subsequent data.

Further, a configured grant in this application may also be referred to as a configured grant (configured grant, CG). A configured grant resource is also referred to as a configured grant resource, that is, a CG resource.

Seventh, in this application, a timing advance may also be referred to as a timing advance value or a timing advance. When no difference is emphasized, the three descriptions indicate a same meaning. The time alignment timer may also be referred to as a timing alignment timer. When no difference is emphasized, the two descriptions indicate a same meaning.

Eighth, in this application, a running state of a timer (for example, a time alignment timer (time alignment timer, TAT), a CG-SDT-TAT, or a CG-SDT-timer in the following method embodiments) includes: running, not to run, not running (that is, not running), and expired.

Ninth, in this application, a value of a first time alignment timer (that is, the CG-SDT-TAT in the following method embodiments) is configured in an RRC release message, or a value configured for the TAT in a SIB is used. A value of a second time alignment timer (that is, the TAT in the following method embodiments) is a value configured in a SIB, or a value configured for the CG-SDT-TAT in an RRC release message is used.

Tenth, in this application, ignoring first indication information may be understood as at least one of the following: not applying the first indication information, deleting the first indication information, and storing the first indication information.

Eleventh, in this application, when the second time alignment timer (that is, the TAT in the following method embodiments) is running, it may be considered that a current TA in a timing advance group TAG associated with the TAT is valid.

Twelfth, different embodiments in this application may be randomly combined, steps in a same embodiment may be randomly combined, and steps in different embodiments may be randomly combined. This is not limited in this application.

Thirteenth, some steps in embodiments of this application are not necessarily strictly performed in a sequence. In some cases, there is no sequence between different steps (that is, it is understood that a sequence of performing steps in embodiments may be adjusted), and different steps may also be performed at the same time. This is not limited in this application.

Fourteenth, an embodiment of the communication method provided in this application is merely an example, and constitutes no limitation. For example, one or more steps in any following embodiment of communication method may be omitted, that is, a device (for example, a terminal device or a network device) may not perform an omitted step.

Fifteenth, in this application, a method for processing a timing advance command received in a random access response of four-step random access is also applicable to a method for processing a timing advance command received in two-step random access.

Without loss of generality, the following describes the communication method provided in embodiments of this application in detail by using interaction between a terminal device and a network device as an example.

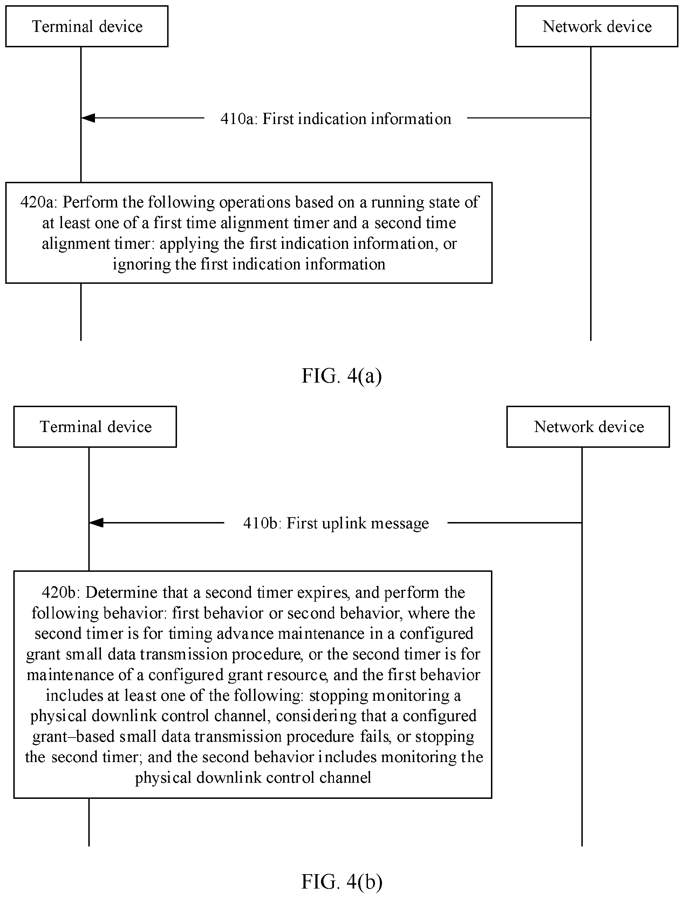

In the communication method provided in embodiments of this application, after the terminal device sends a first uplink message and receives a response message to the first uplink message from the network device, if the terminal device has subsequent data to be sent, in a subsequent data sending phase, if the terminal device triggers a random access procedure, it can be ensured that the terminal device correctly applies a timing advance command in the random access response message to perform timing advance maintenance in the random access procedure, to improve small data transmission efficiency. FIG. 4(a) shows the method. The following specifically describes FIG. 4(a).

FIG. 4(a) is a schematic flowchart of a communication method according to an embodiment of this application. As shown in FIG. 4(a), the method includes step 410a and step 420a. The following describes the step 410a and the step 420a in detail.

The communication method provided in this embodiment of this application is applicable to a subsequent CG-SDT procedure, that is, a procedure in which a terminal device in an inactive (inactive) state performs subsequent configured grant SDT.

Step 410a: The terminal device receives first indication information from a network device.

The first indication information indicates the timing advance information, and a representation form of the first indication information is not specifically limited. For example, the first indication information may be an index value. For another example, the first indication information may alternatively be an adjustment amount. For still another example, the first indication information may alternatively be a timing advance value.

Optionally, the first indication information is carried in one of the following: a random access response message, a media access control control element, downlink control information, or a radio resource control release message.

Step 420a: The terminal device performs the following operations based on a running state of at least one of a first time alignment timer and a second time alignment timer: applying the first indication information or ignoring the first indication information.

Optionally, the first time alignment timer is for timing advance maintenance in a configured grant small data transmission procedure, or the first time alignment timer is for maintenance of a configured grant resource.

Optionally, the first time alignment timer is for timing advance maintenance in a configured grant small data transmission procedure, and/or the first time alignment timer is for maintenance of a configured grant resource. Optionally, the first time alignment timer is carried in a radio resource control release message, and the second time alignment timer is a timer configured in system information (that is, a SIB).

That the terminal device applies the first indication information includes: The terminal device updates a second timing advance value to a first timing advance value, where the second timing advance value is a timing advance that is maintained by the terminal device before the terminal device receives the first indication information and that is for uplink transmission, and the first timing advance value is a timing advance that is determined by the terminal device based on the first indication information and that is for uplink transmission. Optionally, in this implementation, the second time alignment timer is not running. That the second time alignment timer is not running includes: The first time alignment timer is not running and the second time alignment timer is not running; or the first time alignment timer is running and the second time alignment timer is not running. The terminal device updates the first timing advance value to the second timing advance value, that is, the timing advance value currently maintained by the terminal device is replaced with the timing advance value indicated by the first indication information.

That the terminal device ignores the first indication information is not specifically limited. For example, that the terminal device ignores the first indication information may indicate that the terminal device deletes the first indication information. For another example, that the terminal device ignores the first indication information may alternatively indicate that the terminal device does not delete the first indication information, and the terminal device does not apply the first indication information either. For another example, that the terminal device ignores the first indication information may also indicate that after the terminal device receives the first indication information, the terminal device first stores the first indication information (in this case, the terminal device does not apply the first indication information), and then the terminal device applies the first indication information after the first indication information is stored for a period of time. For another example, that the terminal device ignores the first indication information may alternatively indicate that the terminal device continues to maintain a timing advance value maintained by the terminal device before the terminal device receives the first indication information.

In a possible design, after the terminal device applies the first indication information, the following step may be further included: If contention resolution fails, the terminal device updates the first timing advance value to the second timing advance value, where the first timing advance value is the timing advance that is determined by the terminal device based on the first indication information and that is for uplink transmission, and the second timing advance value is the timing advance that is maintained by the terminal device before the terminal device receives the first indication information and that is for uplink transmission. In this implementation, after the terminal device receives the first indication information, the terminal device may first store the first indication information. After the contention resolution fails, the terminal device applies the first indication information. Optionally, in this implementation, the second time alignment timer is not running. That the second time alignment timer is not running includes: The first time alignment timer is not running and the second time alignment timer is not running; or the first time alignment timer is running and the second time alignment timer is not running. Optionally, in this implementation, the terminal device applies the first indication information, and the method further includes: If the first time alignment timer is running, the terminal device restarts the first time alignment timer. That the second timing advance value is a timing advance that is maintained by the terminal device before the terminal device receives the first indication information and that is for uplink transmission may include the following cases: The second timing advance value may be a timing advance value maintained by the terminal device after the terminal device receives the radio resource control release message; the second timing advance value may be a timing advance value maintained by the terminal device after the terminal device receives a timing advance command media access control control element;

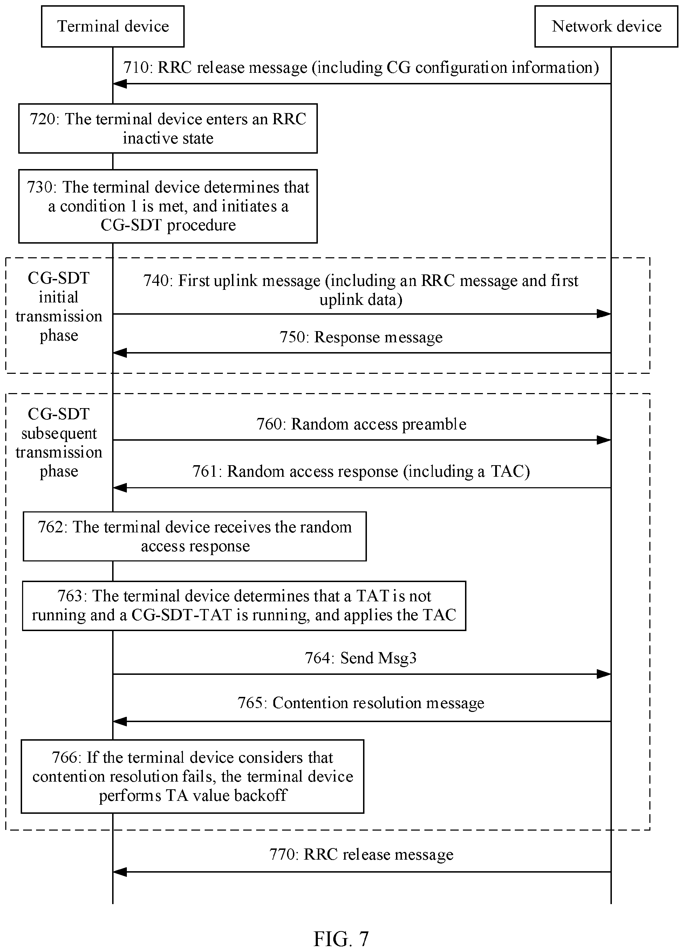

or the second timing advance value may be a timing advance value maintained by the terminal device in a previous random access procedure of the terminal device. For example, FIG. 7 shows this implementation. For detailed content, refer to content described in FIG. 7 below. Details are not described herein again.

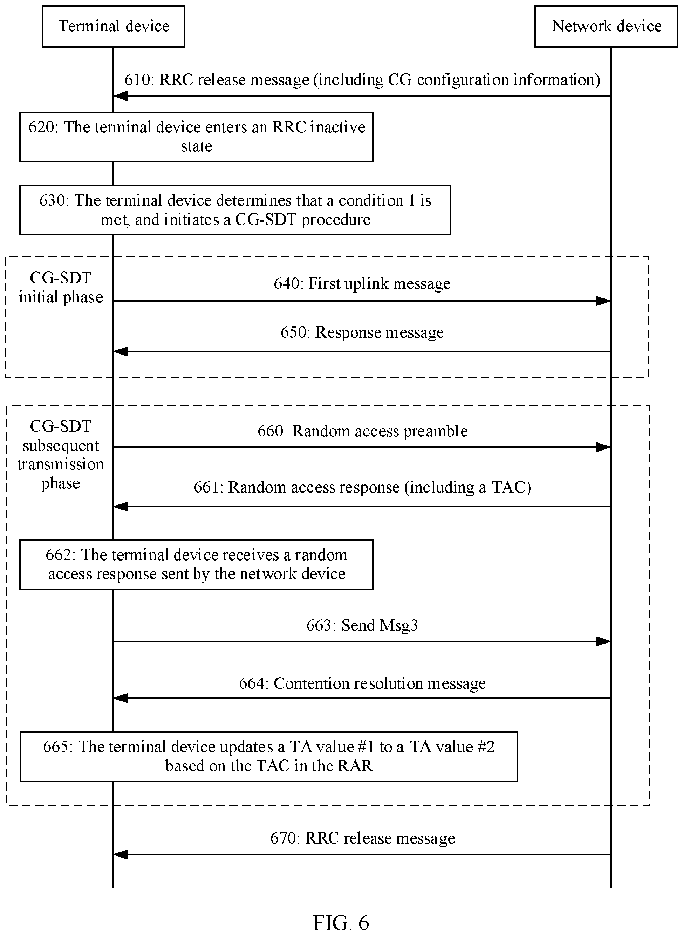

In another possible design, that the terminal device applies the first indication information based on a running state of at least one of a first time alignment timer and a second time alignment timer includes: When a first condition is met, if the contention resolution succeeds, the terminal device applies the first indication information. That a first condition is met includes: The first time alignment timer is running and the second time alignment timer is not running, or the first time alignment timer is running and the second time alignment timer is running. When the first condition is met may but is not limited to be replaced with any one of the following: when the first condition is met, if the first condition is met, in a case in which the first condition is met, and the first condition is met. For example, FIG. 6 shows this implementation. For detailed content, refer to content described in FIG. 6 below. Details are not described herein again.

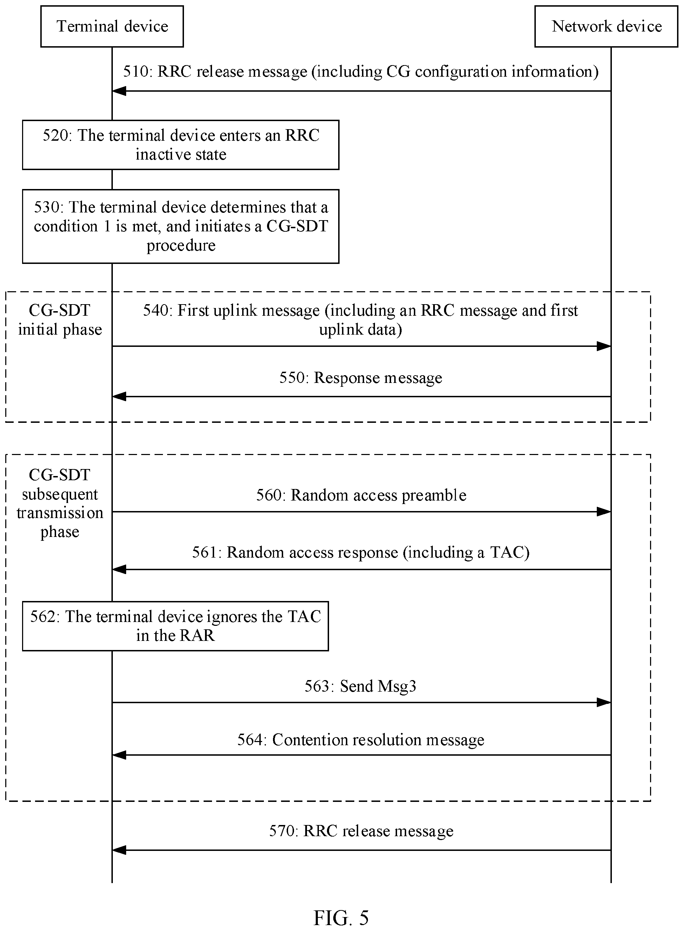

In a possible design, that the terminal device ignores the first indication information based on a running state of at least one of a first time alignment timer and a second time alignment timer includes: When at least one of the first time alignment timer or the second time alignment timer is running, the terminal device ignores the first indication information. Optionally, in this implementation, that at least one of the first time alignment timer or the second time alignment timer is running includes: The first time alignment timer is running and the second time alignment timer is not running, the first time alignment timer is not running and the second time alignment timer is running, or the first time alignment timer is running and the second time alignment timer is running. For example, FIG. 5 shows this implementation. For detailed content, refer to content described in FIG. 5 below. Details are not described herein again. Optionally, in this implementation, the first time alignment timer is running and the second time alignment timer is not running, or the first time alignment timer is running and the second time alignment timer is running. After the terminal device ignores the first indication information, the following step may be further included: If the contention resolution succeeds, the terminal device applies the first indication information. In this implementation, after the terminal device receives the first indication information, the terminal device first ignores the first indication information. After the contention resolution succeeds, the terminal device applies the first indication information. For example, FIG. 6 shows this implementation. For detailed content, refer to content described in FIG. 6 below. Details are not described herein again.

Optionally, the terminal device may further perform the following operation: starting or restarting the second time alignment timer. Specifically, if the second time alignment timer is not running, the terminal device starts the second time alignment timer; or if the second time alignment timer is running, the terminal device starts the second time alignment timer. An occasion for the terminal device to start or restart the second time alignment timer includes: After the terminal device receives a radio resource control timing advance command or a timing advance command media access control control element, the terminal device starts or restarts the second time alignment timer.

Optionally, if the second time alignment timer is not running, the terminal device may further perform the following operation: The terminal device starts the second time alignment timer. Alternatively, if the second time alignment timer is running, the method further includes: The terminal device restarts the second time alignment timer.

Optionally, if the first time alignment timer is not running, the terminal device may further perform the following operation: The terminal device starts the first time alignment timer. Alternatively, if the first time alignment timer is running, the method further includes: The terminal device restarts the first time alignment timer.

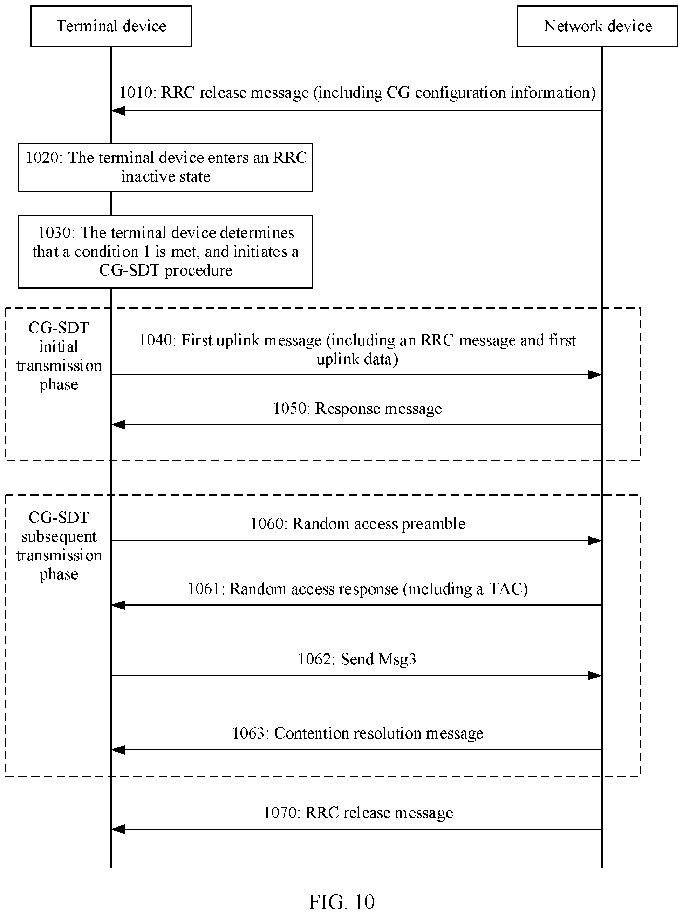

In this embodiment of this application, a terminal device side may maintain two time alignment timers. Optionally, the terminal device side may alternatively maintain a time alignment timer. The time alignment timer may be a time alignment timer (for example, the TAT in the following method embodiments) in a legacy random access procedure, and the time alignment timer is further for timing advance maintenance in a random access procedure. For example, FIG. 10 shows this implementation. For detailed content, refer to content described in FIG. 10 below. Details are not described herein again.

It should be understood that the method described in FIG. 4(a) is merely an example, and constitutes no limitation on the communication method provided in embodiments of this application. For example, the method described in FIG. 4(a) may alternatively be used in combination with the following method described in FIG. 4(b). The specific example of the communication method described in FIG. 4(a) may be but is not limited to the following specific examples described in FIG. 5 to FIG. 7 and FIG. 10. For content that is not described in detail in FIG. 4(a), refer to the following specific examples described in FIG. 5 to FIG. 7 and FIG. 10.

In embodiments of this application, after the terminal device receives the first indication information, the terminal device determines, based on running states of the two time alignment timers (that is, the first time alignment timer and the second time alignment timer), to apply the first indication information or ignore the first indication information. In this method, a timing advance value used by the terminal device in a small data transmission procedure (that is, uplink transmission) can be adjusted more accurately, so that a success rate of uplink transmission can be improved, and small data transmission (that is, uplink transmission efficiency) efficiency can be improved.

An embodiment of this application further provides a communication method. The method may be applied to a CG-SDT procedure. In the method, after a terminal device sends a first uplink message, if a time alignment timer expires, behavior of the terminal device is specified. The method can reduce power consumption of the terminal device and improve SDT efficiency. FIG. 4(b) shows the method. The following specifically describes FIG. 4(b).

FIG. 4(b) is a schematic flowchart of another communication method according to an embodiment of this application. As shown in FIG. 4(b), the method includes step 410b and step 420b. The following describes the step 410b and the step 420b in detail.

The improved communication method in this embodiment of this application may be applied to an initial transmission procedure of configured grant small data transmission, that is, a procedure from time when a terminal device sends a first uplink message to time when the terminal device receives a response message to the first uplink message.

Step 410b: A network device sends a first uplink message to the terminal device.

Correspondingly, the terminal device receives the first uplink message from the network device. The first uplink message may be understood as a first uplink message sent by the terminal device to the network device after the terminal device enters an inactive state. The first uplink message may include an RRC release message and uplink data. The RRC release message may include but is not limited to one or more of the following information: configuration information of a CG resource for SDT, information about an uplink timing maintenance timer (CG-SDT-TAT) for CG-SDT, information about a radio bearer (radio bearer, RB) for SDT, and the like. The first uplink message further includes configuration information of a physical layer and a media access control layer (media access control, MAC) for SDT, BWP configuration information for CG-SDT, and the like. Optionally, the first uplink message may further include assistant information (for example, a BSR and/or RAI) of the terminal device. The configuration information of the configured grant includes but is not limited to one or more of the following information: time domain information, frequency domain information, a periodicity, frequency hopping, and a timer of the configured grant.

After the network device performs the step 410b, correspondingly, the terminal device receives the first uplink message. The terminal device receives the first uplink message, and the terminal device maintains a current timing advance value of the terminal device. The current timing advance value of the terminal device may be understood as a timing advance value currently stored by the terminal device. A source of the timing advance value currently stored by the terminal device is not specifically limited.

Step 420b: The terminal device determines that a second timer expires, and performs the following behavior: first behavior or second behavior, where the second timer is for timing advance maintenance in a configured grant small data transmission procedure, or the second timer is for maintenance of a configured grant resource, and the first behavior includes at least one of the following: stopping monitoring a physical downlink control channel, considering that a configured grant-based small data transmission procedure fails, or stopping the second timer; and the second behavior includes monitoring the physical downlink control channel.

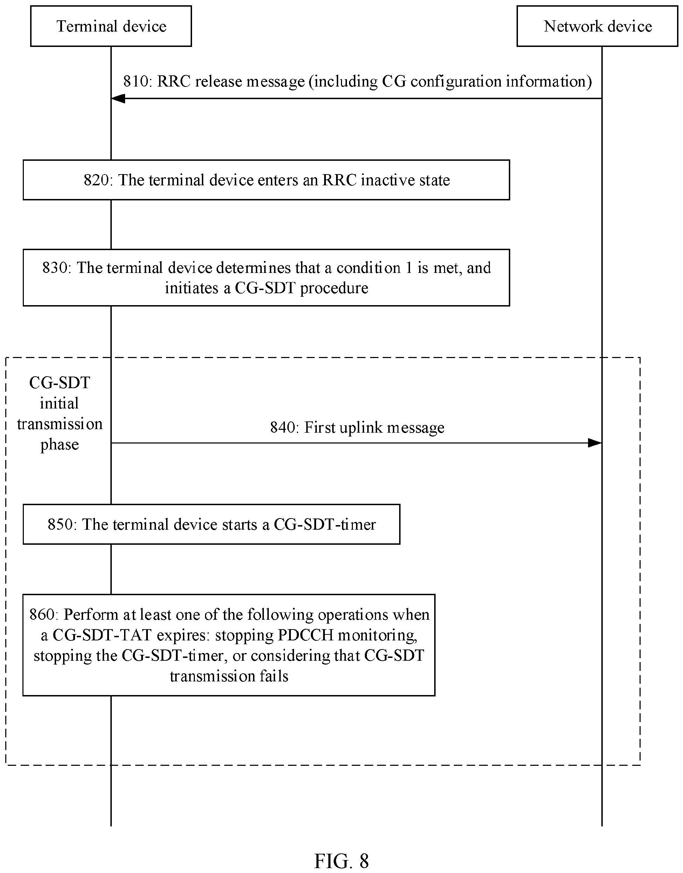

The terminal device determines that the second timer expires, and the terminal device performs the following behavior: the first behavior or the second behavior. In some implementations, the terminal device determines that the second timer expires, and the terminal device immediately performs the first behavior. In some other implementations, the terminal device determines that the second timer expires, and the terminal device may perform the first behavior after a period of time. For example, FIG. 8 shows a specific example in which "the terminal device determines that the second timer expires, and the terminal device performs the first behavior". For specific content, refer to the method described in FIG. 8. Details are not described herein again.

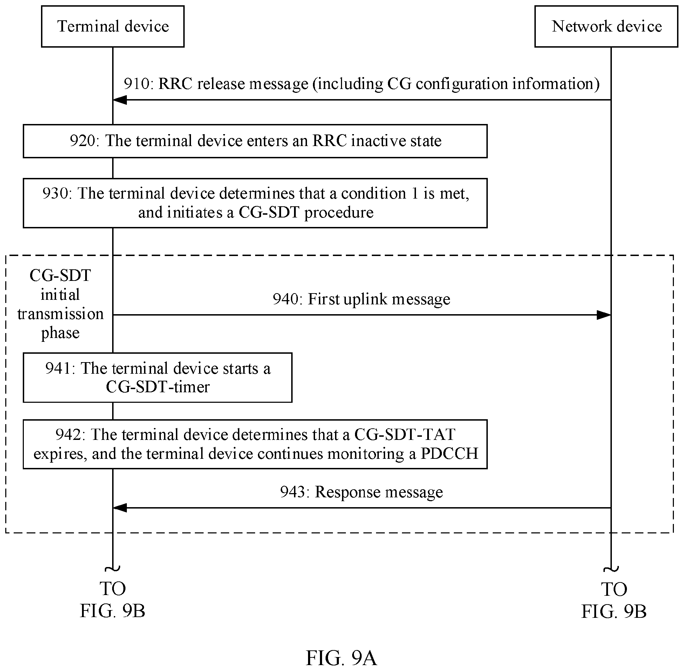

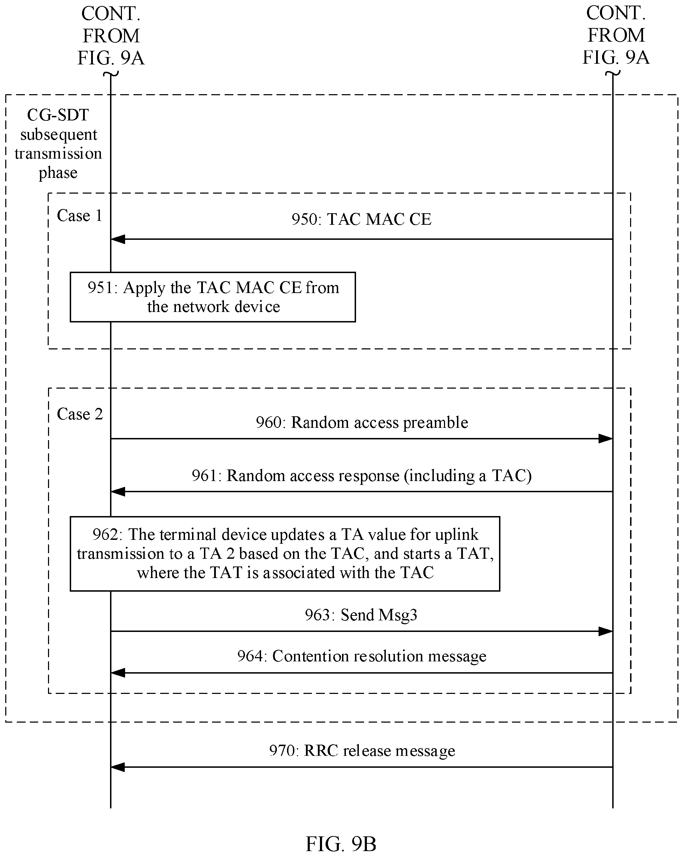

Optionally, after the step 420b, the following operations may be further performed: The terminal device starts a first timer, where the first timer is a timer for controlling monitoring of the physical downlink control channel. When the first timer expires, if the terminal device has not received the response message to the first uplink message, the terminal device performs the first behavior. For example, FIG. 9A and FIG. 9B show a specific example of this implementation. For specific content, refer to related descriptions in step 943 described in FIG. 9A and FIG. 9B. Details are not described herein again.

Optionally, that the terminal device performs the second behavior when the second timer expires includes: When the second timer expires and the first timer does not expire, the terminal device monitors the physical downlink control channel, and receives the response message to the first uplink message. For example, a CG-SDT initial transmission phase in the following method embodiment in FIG. 9A and FIG. 9B show a specific example of this implementation. Details are not described herein again. The response message to the first uplink message may be feedback received by the terminal device from the network device (the feedback may be an explicit acknowledgment message), or may be an implicit feedback of an uplink resource or a downlink assignment scheduled by a network. Optionally, the response message to the first uplink message may also be a timing advance command media access control element sent by the network device.

In a possible design, the response message to the first uplink message does not carry first indication information, and the first indication information indicates first timing advance adjustment information. In this implementation, after the step 420b, the following operations may be further performed: The terminal device receives second indication information from the network device, where the second indication information indicates second timing advance adjustment information. The terminal device applies the second indication information to update a second timing advance value to a first timing advance value, where the second timing advance value is a timing advance that is maintained by the terminal device before the terminal device receives the second indication information and that is for uplink transmission, and the first timing advance value is a timing advance that is determined by the terminal device based on the second indication information and that is for uplink transmission. For example, in this implementation, refer to related descriptions of a case 2 in the method embodiment described in FIG. 9A and FIG. 9B. Details are not described herein again.

In another possible design, the response message to the first uplink message carries first indication information. In this implementation, after the step 420b, the following operations may be further performed: The terminal device applies the first indication information to update the second timing advance value to a third timing advance value, where the second timing advance value is a timing advance that is maintained by the terminal device before the terminal device receives the first indication information and that is for uplink transmission, and the third timing advance value is a timing advance that is determined by the terminal device based on the first indication information and that is for uplink transmission. For example, in this implementation, refer to related descriptions of a case 1 in the method embodiment described in FIG. 9A and FIG. 9B. Details are not described herein again.

The response message to the first uplink message may be feedback received by the terminal device from the network device (the feedback may be an explicit acknowledgment message), or may be an implicit feedback of an uplink resource or a downlink assignment scheduled by a network. The explicit acknowledgment message may be one of the following: a TAC MAC CE, a downlink RRC message, or downlink control message (downlink control information, DCI) sent by the network device. The implicit feedback may be understood as an uplink resource or a downlink assignment scheduled by a network, or a TAC MAC CE sent by the network device.

Optionally, the response message to the first uplink message may also be a timing advance command media access control element sent by the network device. In another possible design, the response message to the first uplink message does not carry the first indication information, and the first indication information indicates first timing advance adjustment information.

Optionally, after the step 420b, the following operation may be further performed: The terminal device stops the second timer. In some implementations, when the terminal device receives the RRC feedback message, the terminal device stops the second timer. The RRC feedback message may be but is not limited to one of the following: an RRC resume (resume) message, an RRC setup (setup) message, an RRC release (release) message, and an RRC reject (reject) message.

Optionally, the terminal device restarts or starts the second timer in at least the following cases: when the terminal device receives physical uplink shared channel transmission indicated by a CS-RNTI PDCCH, or after each time the terminal device performs configured grant small data transmission CG-SDT.

Optionally, after the step 420b, the following operation may be further performed: When the second timer expires, the terminal device releases the configured grant resource. Then, the terminal device may transmit subsequent data in a dynamic grant manner.

It may be understood that the first indication information and the second indication information are carried in different messages. For example, the first indication information may be carried in a media access control control element, and the second indication information may be carried in a random access response. It should be understood that the method described in FIG. 4(b) is merely an example, and constitutes no limitation on the communication method provided in embodiments of this application. For example, the method described in FIG. 4(b) may alternatively be used in combination with the method described in FIG. 4(a). The specific example of the communication method described in FIG. 4(b) may be but is not limited to the following specific examples described in FIG. 8, FIG. 9A, and FIG. 9B. For content that is not described in detail in FIG. 4(b), refer to related descriptions of the following specific examples described in FIG. 8, FIG. 9A, and FIG. 9B.

In this embodiment of this application, the terminal device determines that the second timer expires. In an implementation, the terminal device performs the first behavior. To be specific, when the second timer expires, the terminal device performs at least one of the following: stopping monitoring the physical downlink control channel, considering that the configured grant-based small data transmission procedure fails, or stopping the second timer, so that the terminal device can be prevented from continuing monitoring the physical downlink control channel, and a power consumption increase can be avoided. This helps improve small data transmission efficiency. In another implementation, the terminal device determines that the second timer expires, and the terminal device performs the second behavior. To be specific, when the second timer expires, the terminal device continues monitoring the physical downlink control channel for a period of time, so that the terminal device can be prevented from missing a response of the network device to the first uplink message and considers that the entire data transmission procedure fails. This helps improve the small data transmission efficiency.

The foregoing describes the two communication methods provided in embodiments of this application with reference to FIG. 4(a) and FIG. 4(b). The following describes, with reference to FIG. 5 to FIG. 10, five specific embodiments of the communication method provided in embodiments of this application. It is to be understood that examples in FIG. 5 to FIG. 10 is merely intended to help a person skilled in the art understand embodiments of this application, instead of limiting embodiments of this application to a specific value or a specific scenario of the examples. It is clear that a person skilled in the art can make various equivalent modifications or changes based on the examples in FIG. 5 to FIG. 10 provided below, and such modifications and changes also fall within the scope of embodiments of this application.

FIG. 5 is a schematic flowchart of a specific embodiment of a communication method according to an embodiment of this application. As shown in FIG. 5, the method includes step 510 to step 570. The following describes the step 510 to the step 570 in detail.

Step 510: A network device sends an RRC release message to a terminal device.

The RRC release message is a radio resource control (radio resource control, RRC) release message. The RRC release message may include but is not limited to one or more of the following information: configuration information of a CG resource for SDT, information about an uplink timing maintenance timer (denoted as CG-SDT-TAT) for CG-SDT, RB information for the SDT, and the like. The message further includes configuration information of a physical layer and a MAC layer for the SDT, and BWP configuration information for the CG-SDT, and the like.

The configuration information of the CG resource includes but is not limited to one or more of the following information: CG time domain information, CG frequency domain information, periodicity information, frequency hopping information, or a timer. The timer may include at least one of the following: a CG-SDT-TAT; a timer for controlling new transmission of an uplink message, where if the timer is running, new transmission cannot be performed in a HARQ process associated with the timer; and a configured grant retransmission timer, where the configured grant retransmission timer is for controlling retransmission of the uplink message.

The network device performs the step 510. Correspondingly, the terminal device receives the RRC release message. The terminal device receives the RRC release message, and the terminal device maintains a current timing advance value of the terminal device. The terminal device receives the RRC release message from the network device, and starts a timer that is configured in the message and that is for timing advance maintenance. For ease of description, the timer is briefly denoted as the CG-SDT-TAT in this application. The current timing advance value of the terminal device is understood as a timing advance value currently stored by the terminal device. A source of the timing advance value currently stored by the terminal device is not specifically limited. For ease of description, the timing advance value currently stored by the terminal device is denoted as a TA value #1 in the following.

Step 520: The terminal device enters an RRC inactive state.

In the step 520, after the terminal device receives the RRC release message sent by the network device, the terminal device enters the RRC inactive state.

Optionally, that the terminal device further starts the CG-SDT-TAT is further included.

Step 530: The terminal device determines that a condition 1 is met, and initiates a CG-SDT procedure.

The terminal device determines that a condition 1 is met, that is, the terminal device determines that at least one of the following is met: a CG resource of the terminal device is valid, the TA value #1 is valid, and the CG-SDT-TAT is running.

That the terminal device determines that a condition 1 is met may further include: All uplink data of the terminal device is data corresponding to an RB used for the SDT, and the RB includes a DRB and/or an SRB.

A total data amount of the uplink data of the terminal device is less than a configured threshold 1, and the threshold 1 is a threshold for determining a data amount of small data transmission in the inactive state.

The reference signal received power (reference signal received power, RSRP) of the terminal device is greater than a configured threshold 2, and the threshold 2 is a threshold for determining reference signal received power or signal quality of small data transmission in the inactive state.

That the terminal device determines that a condition 1 is met may further include: A CG resource is configured on a carrier selected by the terminal device. The carrier may be a UL or an SUL.

The CG resource is a resource used when the terminal device performs uplink transmission, and the CG resource is determined based on a CG configuration in the RRC release message.

After determining that the condition 1 is met, the terminal device initiates the CG-SDT procedure, that is, the procedure described in the following step 540 and step 550.

Step 540: The terminal device sends a first uplink message to the network device.

The first uplink message includes an RRC message and first uplink data. The RRC message may be an RRC resume request message. The first uplink data may be user plane data or other signaling information, for example, positioning information. The first uplink message may further include at least one of the following: a BSR MAC CE, a power headroom report (power headroom report, PHR) MAC CE, or a padding (padding).

Step 550: The network device sends a response message to the terminal device.

Correspondingly, the terminal device receives the response message from the network device. The response message may be understood as a response message to the first uplink message. The response message may be one of the following: an uplink resource or a downlink assignment scheduled by a network, a TAC MAC CE sent by the network device, a downlink RRC message, DCI, or the like.

In this embodiment of this application, the step 540 and the step 550 may be referred to as a CG-SDT initial transmission phase.

The terminal device receives a response to the first uplink message sent by the network device. The terminal device may initiate a subsequent transmission procedure of configured grant-based small data transmission.

The subsequent transmission procedure of configured grant-based small data transmission may be understood as a data transmission procedure in a procedure from time when the terminal device receives the first uplink response message to time when the terminal device receives a release message of the network. The subsequent transmission procedure of configured grant-based small data transmission may be alternatively understood as a data transmission procedure from time when the initial transmission phase of the terminal device completes to time when the terminal device receives the RRC release message sent by the network device.

In the subsequent transmission procedure of configured grant-based small data transmission, the terminal device may initiate a random access procedure.

In the subsequent transmission procedure of configured grant-based small data transmission, the terminal device initiates the random access procedure in at least one of the following cases: when there is no SSB that meets quality, when a timing advance value is invalid, or when an uplink resource is insufficient or no uplink is available and a scheduling request (scheduling request, SR) is triggered. In the random access procedure, random access is performed by using a random access resource that is for non-small data transmission and that is configured by the network. The random access resource for non-small data transmission is a random access occasion and a preamble resource that are configured by the network and that are used in a random access procedure for non-small data transmission. The random access occasion is a time-frequency resource for sending the random access preamble.

When the terminal device triggers a random access procedure in the subsequent transmission procedure due to one of the cases, the terminal device performs step 560 to step 564 after performing the step 550.

Step 560: The terminal device sends the random access preamble (preamble) to the network device.

The random access preamble is used to notify the network device that there is a random access request, so that the network device can estimate transmission latency between the network device and the terminal device. In this case, a latency estimation value is used for a random access response (that is, the following step 561) to adjust uplink sending time of the terminal device.

In the random access procedure, the random access resource that is for non-small data transmission and that is configured by the network is used. The random access resource for non-small data transmission is a random access occasion and a preamble resource that are configured by the network and that are used in a random access procedure for non-small data transmission. The random access occasion is a time-frequency resource for sending the random access preamble. The random access procedure may also be understood as a legacy random access procedure. For example, the legacy random access procedure may be the random access procedure shown in FIG. 3(a).

Step 561: The network device sends a random access response to the terminal device.

Correspondingly, the terminal device receives the random access response message from the network, that is, an RAR message.

The RAR message may include a timing advance command TAC, a temporary identifier (temporary cell radio network temporary identifier, TC-RNTI) of the terminal device, and an uplink grant (uplink grant, UL grant). The TAC is a command for adjusting a timing advance of the terminal device. The TAC may also be understood as indicating to update the TA value #1 for uplink transmission to a TA value #2. The TA value #2 and the TA value #1 are not specifically limited, that is, the TA value #2 may be equal to or not equal to the TA value #1.

For example, Table 1 shows a format of the RAR.

**Table 1**

| R | TAC | Byte 1 |
|---|---|---|
| TAC | UL grant | Byte 2 |
| UL grant | | Byte 3 |
| UL grant | | Byte 4 |
| UL grant | | Byte 5 |
| TC-RNTI | | Byte 6 |
| TC-RNTI | | Byte 7 |

R indicates a reserved bit (bit).

The terminal device receives the timing advance command in the random access response sent by the network device. If the terminal device applies the timing advance command in the random access response, the terminal device updates the TA value according to the following formula:

$$N_{TA} = T_A \times 16 \times \frac{64}{2^u}$$

$T_A$ is an index of a time amount that is adjusted by the terminal device and that is indicated by the timing advance command TAC in the random access response.

In other words, a value of $T_A$ may be an index value, and the index value may range from 0 to 3846. For example, $T_A$ may be equal to 0, 1, 2, 100, or the like. u is a subcarrier spacing. $N_{TA}$ is a timing advance that is between an uplink and a downlink and that is determined by the terminal device based on a timing adjustment command sent by the network device. Optionally, a basic time unit $T_c$ of NR may be used as a unit of $N_{TA}$. $T_c$ is a minimum time unit in NR, and $T_c$ is equal to a sampling interval when a 4096-point fast Fourier transform (fast fourier transform, FFT) is used when the subcarrier spacing is 480 kHz (kHz). In other words,

$$T_c = \frac{1}{490000 \times 4096} = \frac{T_s}{64} = 0.5086$$

, where $T_s$ may be a minimum time unit in LTE.

Step 562: The terminal device ignores the TAC in the RAR.

Optionally, the step 562 further includes: If the timing advance timer TAT is not running, the TAT is started.

In this embodiment of this application, the TAT indicates a TAT that is configured in system information (that is, a SIB) and that is for uplink transmission. It may be understood as a timer for timing advance maintenance in the random access procedure. If the timer is running, it may be understood that uplink timing is aligned.

Optionally, the CG-SDT-TAT is a timer for TA maintenance in the CG-SDT procedure.

Optionally, the terminal device may have two timers that are respectively denoted as a CG-SDT-TAT and a TAT. Optionally, the terminal device may have only one timer, that is, a CG-SDT-TAT or a TAT.

Optionally, the TAT may be understood as a TAT associated with a TAG, and is referred to as the TAT for short in this embodiment of this application.

It may be understood that the terminal device maintains only one TA value in the SDT procedure.

The terminal device ignores the TAC in the RAR, that is, the terminal device does not update, based on the TAC in the RAR, the TA value #1 currently maintained by the terminal device. In other words, after the terminal device receives the RAR, the terminal device still maintains the TA value #1, and does not update the TA value based on the TAC in the RAR. That the terminal device ignores the TAC in the RAR may include the following cases:

(1) If the CG-SDT-TAT is not running and the TAT is not running, the TAC is applied; and the TAT is started.

In this embodiment of this application, applying the TAC means updating the TA value based on the TAC.

(2) If at least one of the TAT or the CG-SDT-TAT is running, the terminal device ignores the received TAC.

That at least one of the TAT or the CG-SDT-TAT is running includes the following cases:
When the terminal device has one timer, the TAT or the CG-SDT-TAT is running.

When the terminal device has two timers, the TAT is running and the CG-SDT-TAT is running, the TAT is running and the CG-SDT-TAT is not running, or the TAT is not running and the CG-SDT-TAT is running.

An example in which the terminal device has two timers is used. That the terminal has two timers may be understood as that the terminal device maintains two timers, or the terminal device has two timers. An example in which the terminal device has one timer is used. That the terminal device has one timer may be understood as that the terminal device maintains one timer.

Optionally, when the TAT is not running and the CG-SDT-TAT is running, the terminal device further needs to perform the following operation: starting the TAT. In this implementation, a reason why the terminal device starts the TAT is that the TAT needs to be in a running state when Msg3 sending or an uplink grant and hybrid automatic repeat request (hybrid automatic repeat request, HARQ) information associated with the Msg3 sending or the uplink grant are submitted to the HARQ process.

Optionally, if the TAT is not running and the CG-SDT-TAT is running, the terminal device does not need to start the TA. The Msg3 sending or the uplink grant and hybrid automatic repeat request (hybrid automatic repeat request, HARQ) information associated with the Msg3 sending or the uplink grant are submitted to the HARQ process, and the CG-SDT-TAT is in the running state. In other words, it may be understood as that the timing advance is ensured to be valid based on the CG-SDT-TAT.

In this embodiment of this application, that the CG-SDT-TAT is not running may be understood as that the terminal device is not in the SDT procedure. Optionally, that the CG-SDT-TAT is not running may be understood as that the terminal device is in a legacy RA procedure, or the terminal device does not initiate any access procedure or does not perform any transmission. That the CG-SDT-TAT is running may be understood as that the terminal device is in the SDT procedure. The legacy RA indicates RA in the conventional technology, for example, the RA procedure shown in FIG. 3(a). It may also be understood that, in the random access procedure, random access is performed by using a random access resource that is for non-small data transmission and that is configured by the network. The random access resource for non-small data transmission is a random access occasion and a preamble resource that are configured by the network and that are used in a random access procedure for non-small data transmission. The random access occasion is a time-frequency resource for sending the random access preamble.

Step 563: The terminal device sends Msg3 to the network device.

Optionally, the terminal device sends Msg3 to the network device based on the TA value #1.

It may be understood that, in the step 562, the terminal device ignores the TAC in the RAR, that is, the terminal device does not update the TA based on the TAC for sending Msg3.

Step 564: The network device sends a contention resolution message to the terminal device.

Correspondingly, the terminal device receives the contention resolution message. The contention resolution message indicates that contention resolution succeeds, that is, the random access procedure is successfully completed.

In this embodiment of this application, the step 560 to the step 564 may be referred to as a CG-SDT subsequent transmission phase. It may be understood that, in the CG-SDT subsequent transmission phase, data to be transmitted at a UE side may be data newly generated at the UE side in the subsequent transmission phase, or may be understood as data newly generated after the first uplink data is transmitted. Alternatively, the data may be data that is not fully transmitted at the terminal device side in the CG-SDT initial transmission phase. The data that is not fully transmitted at the terminal device side may be understood as data other than the first uplink data in data segmented by the terminal device, or may be understood as data buffered by the terminal device.

Step 570: The network device sends an RRC release message to the terminal device.

Correspondingly, the terminal device receives the RRC release message from the network device. The RRC release message indicates to end the SDT procedure. The RRC release message may further carry an inactive radio network temporary identifier (inactive radio network temporary identifier, I-RNTI) and downlink (downlink, DL) data.

After the terminal device receives the RRC release message sent by the network device, the terminal device releases the resource and enters an idle state or the inactive state.

Optionally, before the step 570 or the 560, the following step may be further performed: The terminal device has to-be-transmitted data, the terminal device continues to perform subsequent data transmission, and the TA value #1 is used during the data transmission.

Optionally, before the step 570, the following step may be further performed: The network device sends a timing advance command media access control control element (timing advance command MAC control element, TAC MAC CE) to the terminal device. The TAC MAC CE indicates to update a TA value for uplink transmission to a TA value #3. After the terminal device receives the TAC MAC CE, the terminal device applies the TAC. The terminal device updates the TA value #1 to the TA value #3 based on the TAC MAC CE. Optionally, the TAT is further started or restarted, and the CG-SDT-TAT is started or restarted.

The terminal device receives the TAC MAC CE sent by the network device, and updates the TA value according to the following formula:

$$N_{TA\_new} = N_{TA\_old} + (T_A - 31) \times 16 \times \frac{64}{2^u}$$

A size of the TAC in the TAC MAC CE is 6 bits, and indicates a $T_A$ value. An index of the $T_A$ ranges from 0 to 63. $N_{TA\_old}$ is a TA value used before the TAC is received, and $N_{TA\_old}$ is an updated TA value after the TAC is received. $N_{TA\_old}$ may be understood as the TA value #1, and $N_{TA\_new}$ may be understood as the TA value #3 or the following TA #4.

Optionally, if the terminal device receives the TAC MAC CE and applies the timing advance command before the step 570, and there is uplink data transmission between the step 574 and the step 570, the TA value applied during the uplink transmission of the terminal device is an updated TA value after the TAC MAC CE is applied. In other words, it may be understood that the terminal device uses the TA value #3 as a timing advance of the uplink transmission, instead of using the TA value #1 as the timing advance of the uplink transmission.

Optionally, before the step 560, the following step may be further performed: The network device sends the TAC MAC CE to the terminal device. The TAC MAC CE indicates to update the TA value for the uplink transmission. The terminal device receives the TAC MAC CE, and the terminal device applies the TAC, that is, updates the TA value #1 to the TA value #4 based on the TAC MAC CE. Optionally, the terminal device may further start or restart the TAT. Optionally, the terminal device may further start or restart the CG-SDT-TAT.

If the terminal device applies the TAC before the step 560, the TA value #1 described between the step 560 and the step 574 is the TA value #4.

In the foregoing implementation, in the CG-SDT subsequent transmission procedure, if the terminal device triggers the random access procedure and receives the RAR, the terminal device ignores the TAC command in the RAR. If the TAT is not running in this case, the terminal device starts the TAT to transmit Msg3 based on the TA value (that is, the TA value #1) maintained by the UE. In this method, the terminal device is prevented from applying an incorrect TA command to update the TA value, and a probability of an access failure caused by an inaccurate TA is prevented from increasing.

FIG. 6 is a schematic flowchart of a specific embodiment of a communication method according to an embodiment of this application. As shown in FIG. 6, the method includes step 610 to step 670. The following describes the step 610 to the step 670 in detail.

Step 610: A network device sends an RRC release message to a terminal device.

After the network device performs the step 610, correspondingly, the terminal device receives the RRC release message. The terminal device receives the RRC release message, and the terminal device maintains a current timing advance value of the terminal device. The current timing advance value of the terminal device is understood as a timing advance value currently stored by the terminal device. A source of the timing advance value currently stored by the terminal device is not specifically limited. For ease of description, the timing advance value currently stored by the terminal device is denoted as a TA value #1 in the following.

Step 620: The terminal device enters an RRC inactive state.

Optionally, the following step is further included: The terminal device starts a CG-SDT-TAT.

Step 630: The terminal device determines that a condition 1 is met, and initiates a CG-SDT procedure.

The terminal device determines that a condition 1 is met, that is, the terminal device determines that at least one of the following is met: a CG resource of the terminal device is valid, the TA value is valid, and the CG-SDT-TAT is running.

Step 640: The terminal device sends a first uplink message to the network device.

Step 650: The network device sends a response message to the terminal device.

In this embodiment of this application, the step 640 and the step 650 may be referred to as a CG-SDT initial transmission phase, that is, the CG-SDT initial transmission phase includes the step 640 and the step 650.

Step 660: The terminal device sends a random access preamble to the network device.

Step 661: The network device sends a random access response to the terminal device.

Correspondingly, the terminal device receives the random access response sent by the network device. The random access response may include a TAC, a temporary identifier TC-RNTI of the terminal device, and an uplink grant. The TAC indicates to update the TA value for uplink transmission to a TA value #2. The TA value #2 and the TA value #1 are not specifically limited, that is, the TA value #2 may be equal to or not equal to the TA value #1.

The step 610 to the step 661 are in a one-to-one correspondence with the method described in the step 510 to the step 561. For content that is not described in detail herein, refer to the descriptions in the step 510 to the step 561.

Step 662: The terminal device receives the random access response sent by the network device.

Optionally, in the step 662, the terminal device determines that if the TAT is running, the terminal device ignores the received TAC. It may be understood that when the terminal device has one timer, if the TAT is running, the received TAC is ignored. When the terminal device has two timers, the TAT is running, and the CG-SDT-TAT is not running, or the TAT is running, and the CG-SDT-TAT is running, the received TAC is ignored. Optionally, if the CG-SDT-TAT is not running and the TAT is not running, the terminal device applies the TAC. In this implementation, optionally, the terminal device may further start the TAT. In this embodiment of this application, that the terminal device applies the TAC indicates that the terminal device updates, based on the TAC, the TA value currently maintained by the terminal device.

Optionally, in the step 662, the terminal device determines to start the TAT if the TAT is not running and the CG-SDT-TAT is running, or to restart the TAT if the TAT is running and the CG-SDT-TAT is running.

The TAT is not running and the CG-SDT-TAT is running, the TAT is started. In this implementation, a reason why the terminal device starts the TAT is that the TAT needs to be running when Msg3 sending or an uplink grant and HARQ information associated with the Msg3 sending or the uplink grant are submitted to the HARQ process.

Optionally, it is determined that the TAT is running and the CG-SDT-TAT is running, and the TAT is restarted. In this implementation, that is, in the CG-SDT subsequent transmission procedure (the TAT has been started, but the time for starting the TAT is not specifically limited, and only the TAT needs to be started before the step 662).

In this embodiment of this application, the TAT indicates a TAT that is configured in system information and that is for uplink transmission.

Optionally, the CG-SDT-TAT is a timer for TA maintenance in the CG-SDT procedure. Optionally, the CG-SDT-TAT is configured in an RRC release message.

Optionally, the terminal device has two timers that are respectively denoted as a CG-SDT-TAT and a TAT. Optionally, the terminal device may have only one timer, that is, a CG-SDT-TAT or a TAT.

Optionally, the TAT may be understood as a TAT associated with a TAG, and is referred to as the TAT for short in this embodiment of this application.

It may be understood that the terminal device maintains only one TA value in the SDT procedure.

In this embodiment of this application, the CG-SDT-TAT is not running, that is, the terminal device is not in the SDT procedure. The CG-SDT-TAT is running, that is, the terminal device is in the SDT procedure.

Step 663: The terminal device sends Msg3 to the network device.

Optionally, the terminal device sends the message 3 to the network device based on the TA value #1.

It may be understood that, in the step 660, the terminal device receives the RAR sent by the network device, and the TAC in the RAR indicates to be used for updating the TA value for uplink transmission. In other words, it is understood that the TAC in the RAR indicates to update the TA value for uplink transmission to the TA value #2. After the terminal device receives the RAR, the terminal device does not update, based on an indication of the TAC, the TA value currently maintained by the terminal device to the TA value #2, and the terminal device does not send Msg3 based on the TA value #2, but sends Msg3 based on the TA value #1. The TA value #1 is a TA value maintained at the terminal device side for the terminal device in the initial phase.

Step 664: The network device sends a contention resolution message to the terminal device.

Correspondingly, the terminal device receives the contention resolution message. In the step 664, the network device sends the contention resolution message to the terminal device, where the contention resolution message indicates that contention resolution succeeds. If the terminal device considers that the contention resolution succeeds, that is, the random access procedure is successfully completed, the terminal device may perform the following step 665. In other words, when the contention resolution message received by the terminal device indicates that the contention resolution fails, the following step 665 is not performed.

Step 665: The terminal device updates the TA value #1 to the TA value #2 based on the TAC in the RAR.

It should be understood that, in a combination of running states of the TAT and the CG-SDT-TAT in the step 662, in some cases, the terminal device optionally performs the step 665. Specifically, for example, when the terminal device receives the RAR, if the TAT is not running and the CG-SDT-TAT is running, and if the terminal device considers that the contention resolution succeeds, the TAC in the RAR is applied. For another example, when the terminal device receives the RAR, if the TAT is running and the CG-SDT-TAT is running, and if the terminal device considers that the contention resolution succeeds, the TAC in the RAR is applied. The case in which the TAC command is applied after the contention resolution described in this step is only an example in which the terminal device applies the TAC in the RAR after the contention resolution succeeds in the step 665 in the combination of running states of the TAT and the CG-SDT-TAT in the step 662, and does not limit all the combinations.

Optionally, after the step 665, the following operation may be further performed: The terminal device restarts the CG-SDT-TAT.

Step 670: The network device sends an RRC release message to the terminal device.

Correspondingly, the terminal device receives the RRC release message, where the RRC release message indicates to end the SDT procedure. The RRC release message may further carry an I-RNTI and downlink data.

Optionally, before the step 670, the following step may be further performed: The terminal device has to-be-transmitted data, and the terminal device continues to perform subsequent data transmission.

It should be understood that, if the terminal device transmits data before the step 670, and if the data is transmitted after the step 665, the terminal device uses the TA value #2 when performing data transmission.

In the implementation, after the contention resolution succeeds, the terminal device applies the TAC in the RAR to update the TA value, so that the TA value of the terminal device is more accurately adjusted. Further, the terminal device may restart the CG-SDT-TAT. Optionally, it may be understood as the method shown in FIG. 6. Based on the method shown in FIG. 5, if the contention resolution succeeds, the terminal device applies the TAC in the RAR, so that the TA value of the terminal device is more accurately adjusted.

FIG. 7 is a schematic flowchart of a specific embodiment of a communication method according to an embodiment of this application. As shown in FIG. 7, the method includes step 710 to step 770. The following describes the step 710 to the step 770 in detail.

Step 710: A network device sends an RRC release message to a terminal device.

After the network device performs the step 710, correspondingly, the terminal device receives the RRC release message. The terminal device receives the RRC release message, and the terminal device maintains a current timing advance value of the terminal device. The current timing advance value of the terminal device is understood as a timing advance value currently stored by the terminal device. A source of the timing advance value currently stored by the terminal device is not specifically limited. For ease of description, the timing advance value currently stored by the terminal device is denoted as a TA value #1 in the following.

Step 720: The terminal device enters an RRC inactive state.

Optionally, the following step is further included: The terminal device starts a CG-SDT-TAT.

Step 730: The terminal device determines that a condition 1 is met, and initiates a CG-SDT procedure.

The terminal device determines that a condition 1 is met, that is, the terminal device determines that at least one of the following is met: a CG resource of the terminal device is valid, the TA value #1 is valid, and the CG-SDT-TAT is running.

Step 740: The terminal device sends a first uplink message to the network device.

Step 750: The network device sends a response message to the terminal device.

In this embodiment of this application, the step 740 and the step 750 may be referred to as a CG-SDT initial transmission phase, that is, the CG-SDT initial transmission phase includes the step 740 and the step 750.

Step 760: The terminal device sends a random access preamble to the network device.

Step 761: The network device sends an RAR to the terminal device.

Correspondingly, the terminal device receives the random access response sent by the network. The random access response may include a TAC, a temporary identifier TC-RNTI of the terminal device, and an uplink grant. The TAC indicates to update the TA value for uplink transmission to a TA value #2. The TA value #2 and the TA value #1 are not specifically limited, that is, the TA value #2 may be equal to or not equal to the TA value #1.

The step 710 to the step 761 are in a one-to-one correspondence with the method described in the step 510 to the step 561. For content that is not described in detail herein, refer to the descriptions in the step 510 to the step 561.

Step 762: The terminal device receives the random access response.

The terminal device determines that the TAT is not running, and the terminal device applies the TAC command in the RAR. It may be understood that the terminal device updates, based on the TAC in the RAR, the TA value for uplink data transmission to the TA value #2.

That the terminal device determines that the TAT is not running may include: If the terminal device maintains only one timer, it is understood that the TAT is not running. If the terminal device maintains two timers, it may be understood that the TAT is not running and the CG-SDT-TAT is not running, or the TAT is not running and the CG-SDT-TAT is running. It may be understood that that the terminal device maintains two timers means that the terminal has two timers.

In the implementation, after receiving the RAR, the terminal device updates, based on the TAC in the RAR, the TA value for uplink data transmission.

Step 763: The terminal device determines that the TAT is not running and the CG-SDT-TAT is running, and applies the TAC.

Optionally, the terminal device may further start the TAT.

Optionally, the step 763 may be replaced with the following step: The terminal device determines that the TAT is not running and the CG-SDT-TAT is not running, applies the TAC, and starts the TAT. It may be understood that in this implementation, the terminal device does not perform the following step 766.

Optionally, the terminal device starts or restarts the CG-SDT-TAT. In other words, after the step 763, the terminal device may start or restart the CG-SDT-TAT.

Step 764: The terminal device sends Msg3 to the network device.

Optionally, that the terminal device sends Msg3 to the network device includes: The terminal device sends Msg3 to the network device based on the TA value #2.

Step 765: The network device sends a contention resolution message to the terminal device.

Correspondingly, the terminal device receives the contention resolution message from the network device.

If the terminal device considers that contention resolution fails, specifically, the network device sends the contention resolution message to the terminal device, where the contention resolution message indicates that contention resolution fails. Alternatively, terminal indication information in the contention resolution message received by the terminal from the network matches the terminal. Alternatively, the terminal device starts a contention resolution timer after the step 764. If the contention resolution timer expires, and the terminal device has not received any response from the network device, it may be understood that the terminal device has not received the contention resolution message from the network device, and the terminal device considers that the contention resolution fails.

If the terminal device considers that the contention resolution succeeds, a random access procedure is successful.

Step 766: If the terminal device considers that the contention resolution fails, the terminal device performs TA value backoff.

It should be understood that if the terminal device considers that the contention resolution fails, the terminal device updates the TA value #2 for uplink data transmission in the step 762 to the TA value #1.

It may be alternatively understood that a TA value backoff operation may be: After the terminal device receives the random access response message in the step 762, the terminal device maintains a temporary TA value, where the temporary TA value is equal to the TA #1. If the terminal device considers that the contention resolution succeeds in the step 766, the terminal device deletes the temporary TA. If the terminal device considers that the contention resolution fails in the step 766, the terminal device replaces the TA #2 with the temporary TA value.

Optionally, after the step 766, the following step may be further performed: The terminal device starts or restarts the CG-SDT-TAT.

Step 770: The network device sends an RRC release message to the terminal device.

Correspondingly, the terminal device receives the RRC release message, where the RRC release message indicates to end the SDT procedure. The RRC release message may further carry an I-RNTI and downlink data.

Optionally, before the step 770, the following step may be further performed: The terminal device has to-be-transmitted data, and the terminal device continues to perform subsequent data transmission.

In the implementation, an RA procedure is triggered in a CG-SDT subsequent transmission. After receiving the RAR, the terminal device first applies the TAC in the RAR, and the terminal sends Msg3 based on an updated TA value. If the contention resolution fails, the terminal device falls back to the TA value maintained before the TAC is applied. In this way, the terminal device can send Msg3 based on a more accurate TA. If the contention resolution fails, the TA value backoff is performed, thereby avoiding application of an incorrect TA value.

FIG. 8 is a schematic flowchart of a specific embodiment of a communication method according to an embodiment of this application. As shown in FIG. 8, the method includes step 810 to step 860. The following describes the step 810 to the step 860 in detail.

Step 810: A network device sends an RRC release message to a terminal device.

The RRC release message includes CG configuration information.

Correspondingly, the terminal device receives the RRC release message. The terminal device receives the RRC release message, and a terminal device side maintains a TA value for the terminal device. For ease of description, the TA value is denoted as a TA value #1 below.

Step 820: The terminal device enters an RRC inactive state.

Optionally, the terminal device further starts a CG-SDT-TAT.

Step 830: The terminal device determines that a condition 1 is met, and initiates a CG-SDT procedure.

Step 840: The terminal device sends a first uplink message to the network device.

The method described in the step 810 to the step 840 is the same as the method described in the step 510 to the step 540. For content that is not described in detail herein, refer to related descriptions in the step 510 to the step 540.

Step 850: The terminal device starts a timer CG-SDT-timer.

In this embodiment of this application, the CG-SDT-timer is a timer for monitoring a PDCCH in a configured grant small data transmission procedure.

Optionally, the terminal device starts the CG-SDT-timer after sending configured grant transmission or dynamic grant transmission.

Optionally, the terminal device is started on a first valid PDCCH occasion on which CG-SDT physical uplink shared channel (PUSCH) transmission ends.

Step 860: The CG-SDT-TAT expires.

In this embodiment of this application, the CG-SDT-TAT is a timer for TA maintenance in the CG-SDT procedure.

Optionally, the CG-SDT-TAT timer may alternatively be a timer for CG resource maintenance. The terminal device determines that the CG-SDT-TAT expires, and the terminal device performs at least one of the following operations: stopping PDCCH monitoring, stopping the CG-SDT-timer, or considering that CG-SDT fails.

When the CG-SDT-TAT expires, the terminal device releases a CG resource and retains a currently maintained TA value, that is, the TA value #1. It should be noted that, when the terminal device determines that the CG-SDT-TAT expires, the terminal device performs: stopping PDCCH monitoring, stopping the CG-SDT-timer, and considering that CG-SDT fails, the three actions are not necessarily performed at the same time. After the terminal device considers that the CG-SDT procedure fails, optionally, the terminal device enters an RRC idle IDLE state, also referred to as an RRC_IDLE state, or remains in the RRC inactive state, also referred to as an RRC_INACTIVE state.

In the implementation, in a CG-SDT initial transmission phase, after the terminal device sends the first uplink message, if the CG-SDT-TAT of the terminal device expires, the following behavior of the terminal device is specified: The terminal device considers that the CG-SDT procedure fails, and the terminal device immediately stops PDCCH monitoring. This prevents the terminal device from continuing monitoring the PDCCH and resulting in a power consumption increase, and reduces power consumption of the terminal device.

FIG. 9A and FIG. 9B are a schematic flowchart of a specific embodiment of a communication method according to an embodiment of this application. As shown in FIG. 9A AND FIG. 9B, the method includes step 910 to step 990. The following describes the step 910 to the step 990 in detail.

Step 910: A network device sends an RRC release message to a terminal device.

The RRC release message includes CG configuration information.

Correspondingly, the terminal device receives the RRC release message from the network device. The terminal device receives the RRC release message, and a terminal device side maintains a TA value for the terminal device. For ease of description, the TA value is denoted as a TA value #1 below.

Step 920: The terminal device enters an RRC inactive state.

Step 930: The terminal device determines that a condition 1 is met, and initiates a CG-SDT procedure.

Step 940: The terminal device sends a first uplink message to the network device.

The method described in the step 910 to the step 940 is the same as the method described in the step 510 to the step 540. For content that is not described in detail herein, refer to related descriptions in the step 510 to the step 540.

Step 941: The terminal device starts a timer CG-SDT-timer.

In this embodiment of this application, the CG-SDT-timer is a timer for monitoring a PDCCH in a configured grant small data transmission procedure.

Step 942: The terminal device determines that a CG-SDT-TAT expires, and the terminal device continues monitoring the PDCCH.

In this embodiment of this application, the CG-SDT-TAT is a timer for TA maintenance in the CG-SDT procedure.

It should be understood that, when the CG-SDT-TAT expires, the CG-SDT-timer is running, or the CG-SDT-timer is not running.

Optionally, when the terminal device determines that the CG-SDT-TAT expires, the terminal device may further stop the CG-SDT-timer.

Optionally, when the terminal device determines that the CG-SDT-TAT expires, the terminal device may further start or restart the CG-SDT-timer.

Step 943: The network device sends a response message to the terminal device.

Correspondingly, the terminal device receives the response message sent by the network device. If the CG-SDT-timer does not expire when the terminal device receives the response message, the terminal device considers that the first uplink message is successfully transmitted.

It should be understood that the response message sent by the network device indicates that the first uplink message is successfully transmitted.

Optionally, the response message may include an uplink resource or a downlink assignment scheduled by a network, a TAC MAC CE sent by the network device, a downlink RRC message, DCI, or the like. In this implementation, the response message indicates that the first uplink message is successfully transmitted.

Optionally, the response message may also be indication information indicating that the first uplink message is successfully transmitted. The indication information may be explicit indication information or implicit indication information, or may be implicit feedback information or explicit feedback information. In this implementation, the explicit indication, the implicit indication, the implicit feedback, or the explicit feedback indicates that the first uplink message is successfully transmitted. The implicit feedback may be one of the following: the uplink resource or the downlink assignment scheduled by the network or the TAC MAC CE sent by the network device. The explicit feedback information may be one of the following: the downlink RRC message, the DCI, or the TAC MAC CE sent by the network device.

Optionally, the step 943 may be replaced with the following step: The terminal device receives a response message from the network device; and if the terminal device determines that the CG-SDT-timer expires, and has not received the response message to the first uplink message from the network device, the terminal device performs at least one of the following: considering that the CG-SDT procedure fails, and stopping PDCCH monitoring. Optionally, the terminal device enters an idle state or returns to the inactive state. In this implementation, the following steps are not performed after the step 943: the steps described in the case 1, the steps described in the case 2, and the step 970.

In this embodiment of this application, it may be understood that a phase after the terminal device receives the response message is a CG-SDT subsequent transmission phase.

The CG-SDT subsequent transmission phase may be a procedure described in the case 1 or the case 2. The case 1 includes step 950 and step 951, and the case 2 includes step 960, step 961, step 962, step 963, and step 964. The following describes these steps in detail.

Case 1

Step 950: The network device sends a TAC MAC CE to the terminal device.

The TAC MAC CE indicates information about timing advance adjustment.

Optionally, the TAC MAC CE indicates to update a TA value for uplink transmission to a TA 1.

Correspondingly, the terminal device receives the TAC MAC CE from the network device.

Step 951: The terminal device applies the TAC MAC CE from the network device.

It may be understood that the terminal device receives the TAC MAC CE from the network device, and the terminal device updates the TA value for uplink transmission data to the TA 1. That the terminal device updates the TA value for uplink transmission data to the TA 1 may be understood as that the terminal device replaces a TA value currently maintained by the terminal device with a new TA value calculated based on the TAC MAC CE.

It may be understood that the terminal device receives the TAC MAC CE from the network device, and that the terminal device applies the TAC MAC CE further includes: The terminal device starts the TAT.

Optionally, after the step 951, the terminal device may further restart the CG-SDT-TAT.

Optionally, after the step 951, if there is to-be-sent data at the terminal device side, the terminal device may further perform the following step: The terminal device performs uplink data transmission based on a dynamic grant (dynamic grant, DG) resource scheduled by the network. Optionally, the terminal device transmits uplink data based on the TA 1. In this implementation, because the CG-SDT-TAT has expired, the terminal device has released a CG resource. In this case, the terminal device has no CG resource for uplink data transmission. Therefore, the terminal device can perform uplink transmission only based on the DG resource scheduled by the network.

Case 2

Step 960: The terminal device sends a random access preamble to the network device.

The step 960 is the same as the step 560. For content that is not described in detail herein, refer to the related descriptions of the step 560.

Step 961: The network device sends a random access response to the terminal device.

The step 961 is the same as the step 561. For content that is not described in detail herein, refer to the related descriptions of the step 561.

The RAR includes a TAC, and the TAC indicates to update the TA value for uplink transmission to a TA 2.

Step 962: The terminal device updates the TA value for uplink transmission to the TA 2 based on the TAC, and starts the TAT, where the TAT is associated with the TAC.

Step 963: The terminal device sends Msg3 to the network device.

Optionally, the terminal device sends Msg3 to the network device based on the TA 2.

The step 960 is the same as the step 560. For content that is not described in detail herein, refer to the related descriptions of the step 560.

Step 964: The network device sends a contention resolution message to the terminal device.

Correspondingly, the terminal device receives the contention resolution message from the network device. The contention resolution message indicates that contention resolution succeeds, that is, the random access procedure is successfully completed.

Step 970: The network device sends an RRC release message to the terminal device.

The RRC release message indicates to end the SDT procedure. The RRC release message may carry an I-RNTI and downlink data.

Optionally, before the step 970, the following step may be further performed: The terminal device has to-be-transmitted data, the terminal device continues to perform subsequent data transmission, and a TA value used by the terminal device to perform uplink data transmission is the TA 2.

In this embodiment of this application, implementation of the CG-SDT-timer is not specifically limited. Optionally, the CG-SDT-timer may be alternatively replaced with a newly introduced timer. The timer is used to determine duration in which the terminal device monitors the PDCCH after the terminal device sends the uplink message.

In the implementation, in a CG-SDT initial transmission phase, after the terminal device sends the first uplink message, if the CG-SDT-TAT of the terminal device expires, the following behavior of the terminal device is specified: The terminal device continues PDCCH monitoring for a period of time. This prevents the terminal device from missing the response of the network to the first uplink message and considering that the entire SDT procedure fails. If the terminal device receives the response from the network device within the period of time in which the timer expires and the monitoring continues, the terminal device may continue the SDT procedure, to ensure that data continues being transmitted in the inactive state, and reduce power consumption of the terminal device.

FIG. 10 is a schematic flowchart of a specific embodiment of a communication method according to an embodiment of this application. As shown in FIG. 10, the method includes step 1010 to step 1070.

In this application, it may be understood that, in a configured grant-based small data transmission (denoted as a CG-SDT) procedure, a terminal device maintains a timing advance TA by using a legacy timing advance timer. The legacy timing advance timer is denoted as a TAT. It should be understood that the TAT is configured in system information. In this application, it may be understood that, in the configured grant-based small data transmission procedure, a timer that is configured in a previous RRC release message and that is for CG-SDT resource maintenance is denoted as a CG-SDT-TAT. This timer is used for only maintaining a configured grant resource. It may be understood that, if the CG-SDT-TAT is running, it is considered that the CG resource is valid; and if the CG-SDT-TAT expires, the terminal device releases the CG resource. Optionally, if the terminal device applies a network timing advance command or receives a timing advance command from a network device, the terminal device starts or restarts the CG-SDT-TAT timer.

The following describes step 1010 to step 1070 in detail.

Step 1010: The network device sends an RRC release message to the terminal device.

The RRC release message is a radio resource control (radio resource control, RRC) release message. The message may include but is not limited to one or more of the following information: configuration information of a CG resource for SDT, information about an uplink timing maintenance timer (denoted as CG-SDT-TAT) for configured grant small data transmission, RB information for the SDT, and the like. The message further includes configuration information of a physical layer and a MAC layer for the SDT, and BWP configuration information for the CG-SDT, and the like.

The configuration information of the CG resource includes but is not limited to one or more of the following information: CG time domain information, CG frequency domain information, periodicity information, frequency hopping information, or a timer. The timer may include at least one of the following: the CG-SDT-TAT; a timer for controlling new transmission of an uplink message, where if the timer is running, new transmission cannot be performed in a HARQ process associated with the timer; and a configured grant retransmission timer, where the configured grant retransmission timer is for controlling retransmission of the uplink message. The network device performs the step 1010. Correspondingly, the terminal device receives the RRC release message. The terminal device receives the RRC release message, and the terminal device maintains a current timing advance value of the terminal device. The terminal device receives the RRC release message from the network device, and the terminal device starts a timer that is configured in the message and that is for CG-SDT resource maintenance, denoted as the CG-SDT-TAT in this application. The current timing advance value of the terminal device is understood as a timing advance value currently stored by the terminal device. A source of the timing advance value currently stored by the terminal device is not specifically limited. For ease of description, the timing advance value currently stored by the terminal device is denoted as a TA value #1 in the following.

Step 1020: The terminal device enters an RRC inactive state.

Optionally, that the terminal device starts the CG-SDT-TAT is further included.

Optionally, the terminal device may further start the TAT. Optionally, a value of the TAT is a value configured for the TAT in the system information. Optionally, a value of the TAT is a value configured for the CG-SDT-TAT in the RRC release message, that is, it may be understood that duration configured for the CG-SDT-TAT in the RRC release message is applied to the TAT duration, or the TAT duration is equal to the duration configured for the CG-SDT-TAT in the RRC release message.

Step 1030: The terminal device determines that a condition 1 is met, and initiates a CG-SDT procedure.

The method described in the step 1030 is the same as the method described in the step 530. For content that is not described in detail herein, refer to the related descriptions in the step 530.

Optionally, after the step 1030, the terminal device may further start the TAT. Optionally, a value of the TAT is a value configured for the TAT in the system information. Optionally, a value of the TAT is a value configured for the CG-SDT-TAT in the RRC release message, that is, it may be understood that duration configured for the CG-SDT-TAT in the RRC release message is applied to the TAT duration, or the TAT duration is equal to the duration configured for the CG-SDT-TAT in the RRC release message.

Step 1040: The terminal device sends a first uplink message to the network device.

The method described in the step 1040 is the same as the method described in the step 540. For content that is not described in detail herein, refer to the related descriptions in the step 540.

Optionally, after the step 1040, the terminal device may further start the TAT. Optionally, a value of the TAT is a value configured for the TAT in the system information. Optionally, a value of the TAT is a value configured for the CG-SDT-TAT in the RRC release message, that is, it may be understood that duration configured for the CG-SDT-TAT in the RRC release message is applied to the TAT duration, or the TAT duration is equal to the duration configured for the CG-SDT-TAT in the RRC release message.

Step 1050: The network device sends a response message to the terminal device.

The method described in the step 1050 is the same as the method described in the step 550. For content that is not described in detail herein, refer to the related descriptions in the step 550.

Step 1060: The terminal device sends the random access preamble (preamble) to the network device.

The method described in the step 1060 is the same as the method described in the step 630. For content that is not described in detail herein, refer to the related descriptions in the step 560.

Step 1061: The terminal device receives the random access response sent by the network device.

Optionally, in the step 1061, the terminal device determines that if the TAT is running, the terminal device ignores the received TAC. Alternatively, if the TAT is not running, the terminal device applies the received TAC, and starts the TAT. Optionally, a value of the TAT is a value configured for the TAT in the system information. Alternatively, a value of the TAT is a value configured for the CG-SDT-TAT in the RRC release message, that is, it may be understood that duration configured for the CG-SDT-TAT in the RRC release message is applied to the TAT duration, or the TAT duration is equal to the duration configured for the CG-SDT-TAT in the RRC release message.

Optionally, if the terminal device receives the TAC, the terminal device restarts the CG-SDT-TAT. The value of the CG-SDT-TAT is configured in the RRC release message.

Step 1062: The terminal device sends Msg3 to the network device.

Optionally, if the terminal device applies the TAC in the step 1061, the terminal device transmits Msg3 based on a TA value updated based on the TAC.

Optionally, if the terminal device ignores the TAC in the step 1061, the terminal device transmits Msg3 based on a previously maintained TA value, that is, the TA value #1.

Step 1063: The network device sends a contention resolution message to the terminal device.

Correspondingly, the terminal device receives the contention resolution message from the network device. Correspondingly, the terminal device receives the contention resolution message. The contention resolution message indicates that contention resolution succeeds, that is, the random access procedure is successfully completed.

Step 1070: A network device sends an RRC release message to a terminal device.

Correspondingly, the terminal device receives the RRC release message from the network device. The RRC release message indicates to end the SDT procedure. The RRC release message may further carry an I-RNTI and downlink (downlink, DL) data.

After the terminal device receives the RRC release message sent by the network device, the terminal device releases the resource and enters an idle state or the inactive state. Optionally, before the step 1070 or the step 1060, the following step may be further performed: The terminal device has to-be-transmitted data, and the terminal device performs data transmission based on a configured grant resource or a grant resource dynamically scheduled by the network.

In the implementation, the terminal device uses only the TAT to maintain a timing advance TA value in the small data transmission procedure, and uses the CG-SDT-TAT to maintain the CG resource. In this way, in the entire small data transmission procedure, a timing advance value is maintained by using only one timing advance maintenance timer, so that the TA value of the terminal device is more accurately adjusted, and a success rate of uplink transmission is improved.

The foregoing describes, with reference to FIG. 5 to FIG. 10, the specific embodiments of the communication method provided in this application. It may be understood that different embodiments in this application may be randomly combined, steps in a same embodiment may be randomly combined, and steps in different embodiments may be randomly combined. This is not limited in this application. For example, a combination of the method shown in FIG. 5 and the method shown in FIG. 9A and FIG. 9B is applicable. For example, the CG-SDT initial transmission phase in FIG. 5 may be replaced with the CG-SDT initial transmission phase in FIG. 9A and FIG. 9B. It may be understood that some steps in embodiments of this application are not necessarily strictly performed in a sequence. In some cases, there is no sequence between different steps (that is, it is understood that a sequence of performing steps in embodiments may be adjusted), and different steps may also be performed at the same time. This is not limited in this application.

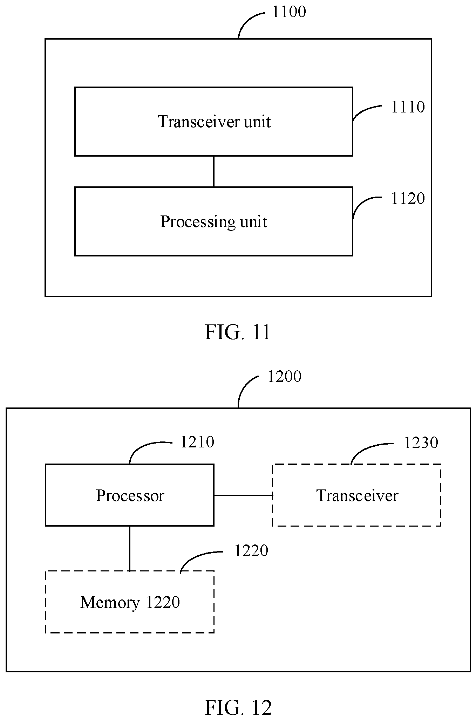

The following describes in detail a communication apparatus provided in this application with reference to FIG. 11 and FIG. 12. It should be understood that descriptions of apparatus embodiments correspond to the descriptions of the method embodiments. Therefore, for content that is not described in detail, refer to the foregoing method embodiments. For brevity, some content is not described again.

In this application, a transmit device or a receive device may be divided into functional modules based on the foregoing method examples. For example, the functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each function module is obtained through division based on each corresponding function is used below for description.

FIG. 11 is a block diagram of a communication apparatus 1100 according to an embodiment of this application. As shown in FIG. 11, the communication apparatus 1100 includes a transceiver unit 1110 and a processing unit 1120.

Optionally, the apparatus 1100 may further include a storage unit. The storage unit may be configured to store instructions and/or data. The processing unit 1120 may read the instructions and/or the data in the storage unit, so that the apparatus implements the foregoing method embodiments.

In a possible design, the apparatus 1100 may be configured to perform an action performed by the terminal device in the foregoing method embodiments. In this case, the apparatus 1100 may be the terminal device or a component that may be configured in the terminal device. The transceiver unit 1110 is configured to perform receiving or sending related operations on a terminal device side in the foregoing method embodiments. The processing unit 1120 is configured to perform processing-related operations on the terminal device side in the foregoing method embodiments.

In another possible design, the apparatus 1100 may be configured to perform an action performed by the network device in the foregoing method embodiments. In this case, the apparatus 1100 may be the network device or a component that can be disposed in the network device. The transceiver unit 1110 is configured to perform receiving and sending related operations of the network device in the foregoing method embodiments. The processing unit 1120 is configured to perform a processing related operation of the network device in the foregoing method embodiments.

It should be understood that a specific process in which the units perform the foregoing corresponding steps is described in detail in the foregoing method embodiments. For brevity, details are not described herein.

The processing unit 1120 in the foregoing embodiment may be implemented by at least one processor or a processor-related circuit. The transceiver unit 1110 may be implemented by using a transceiver or a transceiver-related circuit. The storage unit may be implemented by at least one memory.

FIG. 12 is a block diagram of a communication apparatus 1200 according to an embodiment of this application.

As shown in FIG. 12, the apparatus 1200 includes a processor 1210, and may further include one or more memories 1220. The processor 1210 is coupled to the memory 1220. The memory 1220 is configured to store a computer program or instructions and/or data. The processor 1210 is configured to execute the computer program or the instructions and/or the data stored in the memory 1220, so that the methods in the foregoing method embodiments are performed. Optionally, the apparatus 1200 includes one or more processors 1210.

Optionally, the memory 1220 may be integrated with the processor 1210, or separately disposed.

Optionally, as shown in FIG. 12, the apparatus 1200 may further include a transceiver 1230, and the transceiver 1230 is configured to receive and/or send a signal. For example, the processor 1210 is configured to control the transceiver 1230 to receive and/or send the signal.

In a possible design, the apparatus 1200 is configured to implement the operations performed by the terminal device in the foregoing method embodiments.

In another possible design, the apparatus 1200 is configured to implement the operations performed by the network device in the foregoing method embodiments.

An embodiment of this application further provides a computer-readable storage medium. The computer-readable storage medium stores computer instructions used to implement the method performed by the device (for example, the terminal device or the network device) in the foregoing method embodiments.

For example, when the computer program is executed by a computer, the computer is enabled to implement the method performed by the terminal device in the foregoing method embodiments.

Embodiments of this application further provide a computer program product including instructions. When the instructions are executed by a computer, the computer is enabled to implement the method performed by the device (for example, the terminal device or the network device) in the foregoing method embodiments.

An embodiment of this application further provides a communication system. The communication system includes the device (for example, the terminal device or the network device) in the foregoing embodiments.

For explanations and beneficial effect of related content of any one of the apparatuses provided above, refer to the corresponding method embodiments provided above. Details are not described herein again.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other suitable type of memory.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving, by a terminal device, first indication information from a network device, wherein the first indication information indicates timing advance information; and
   performing, by the terminal device, the following operations based on a running state of at least one of the first time alignment timer and the second time alignment timer:
   applying the first indication information or ignoring the first indication information.

2. The method according to claim 1, wherein
   the first time alignment timer is for timing advance maintenance in a configured grant small data transmission procedure, or the first time alignment timer is for maintenance of a configured grant resource.

3. The method according to claim 1 or 2, wherein
   the first time alignment timer is carried in a radio resource control release message, and the second time alignment timer is a timer configured in system information.

4. The method according to any one of claims 1 to 3, wherein the applying, by the terminal device, the first indication information comprises:

updating, by the terminal device, a second timing advance value to a first timing advance value, wherein the second timing advance value is a timing advance that is maintained by the terminal device before the terminal device receives the first indication information and that is for uplink transmission, and the first timing advance value is a timing advance that is determined by the terminal device based on the first indication information and that is for uplink transmission.

5. The method according to any one of claims 1 to 4, wherein the terminal device applies the first indication information, and the method further comprises:
   if contention resolution fails, updating, by the terminal device, the first timing advance value to the second timing advance value, wherein the first timing advance value is the timing advance that is determined by the terminal device based on the first indication information and that is for uplink transmission, and the second timing advance value is the timing advance that is maintained by the terminal device before the terminal device receives the first indication information and that is for uplink transmission.

6. The method according to claim 4 or 5, wherein the second time alignment timer is not running.

7. The method according to claim 6, wherein that the second time alignment timer is not running comprises:

   the first time alignment timer is not running and the second time alignment timer is not running; or
   the first time alignment timer is running and the second time alignment timer is not running.

8. The method according to claim 6 or 7, wherein the terminal device applies the first indication information, and the method further comprises:
   if the first time alignment timer is running, restarting, by the terminal device, the first time alignment timer.

9. The method according to any one of claims 1 to 3, wherein the applying, by the terminal device, the first indication information based on a running state of at least one of the first time alignment timer and the second time alignment timer comprises:

   when a first condition is met, if contention resolution succeeds, applying, by the terminal device, the first indication information, wherein that a first condition is met comprises: the first time alignment timer is running and the second time alignment timer is not running, or the first time alignment timer is running and the second time alignment timer is running.

10. The method according to claim 1, wherein the ignoring, by the terminal device, the first indication information based on a running state of at least one of the first time alignment timer and the second time alignment timer comprises:
when at least one of the first time alignment timer or the second time alignment timer is running, ignoring, by the terminal device, the first indication information.

11. The method according to claim 10, wherein that at least one of the first time alignment timer or the second time alignment timer is running comprises:
the first time alignment timer is running and the second time alignment timer is not running, the first time alignment timer is not running and the second time alignment timer is running, or the first time alignment timer is running and the second time alignment timer is running.

12. The method according to claim 10 or 11, wherein the first time alignment timer is running and the second time alignment timer is not running, or the first time alignment timer is running and the second time alignment timer is running, and
the method further comprises:
if contention resolution succeeds, applying, by the terminal device, the first indication information.

13. The method according to any one of claims 1 to 12, wherein the method further comprises:
starting or restarting, by the terminal device, the second time alignment timer.

14. The method according to any one of claims 1 to 13, wherein
the first indication information is carried in one of the following: a random access response message, a media access control control element, downlink control information, or a radio resource control release message.

15. A communication method, comprising:

receiving, by a terminal device, a radio resource control RRC release message from a network device, wherein the RRC release message comprises configuration information of a configured grant CG resource for small data transmission SDT;
entering, by the terminal device, an RRC inactive state, and starting a first time alignment timer; and
when the first time alignment timer expires, performing, by the terminal device, first behavior, wherein the first behavior comprises considering that a configured grant-based small data transmission CG-SDT procedure fails; and

the first time alignment timer is a timer for timing advance maintenance in the CG-SDT procedure.

16. The method according to claim 15, wherein the first behavior further comprises at least one of the following:

stopping monitoring a physical downlink control channel;
stopping a second timer, wherein the second timer is a timer for PDCCH monitoring in the CG-SDT procedure; or
releasing the CG configured resource, and retaining a currently maintained timing advance TA value.

17. The method according to claim 15 or 16, wherein the method further comprises:
after the terminal device considers that the CG-SDT procedure fails, entering, by the terminal device, an RRC idle state.

18. The method according to any one of claims 15 to 17, wherein the first time alignment timer expires after the terminal device sends a first uplink message; and the first time alignment timer expires before the terminal device receives a response message to the first uplink message.

19. The method according to any one of claims 15 to 18, wherein the method further comprises:
initiating, by the terminal device, the CG-SDT procedure by determining at least one of the following:

a total data amount of uplink data of the terminal device is less than a configured first threshold;
reference signal received power RSRP of the terminal device is greater than a configured second threshold;
the CG configured resource of the terminal device is valid;
a timing advance TA is valid; or
the first time alignment timer is running.

20. The method according to claim 19, wherein a first condition further comprises: all the uplink data of the terminal device is data mapped to a radio bearer RB configured for the SDT, and the RB comprises a data radio bearer DRB and/or a signaling radio bearer SRB.

21. The method according to claim 19 or 20, wherein the initiating, by the terminal device, the CG-SDT procedure comprises:

sending, by the terminal device, the first uplink message to the network device; and

receiving, by the terminal device, the response message to the first uplink message from the network device.

22. The method according to claim 21, wherein the response message to the first uplink message is one of the following:
an uplink resource scheduled by a network, a downlink assignment scheduled by the network, a downlink RRC message, or downlink control information DCI.

23. The method according to any one of claims 15 to 22, wherein the RRC release message further comprises the first time alignment timer.

24. A communication apparatus, used in a terminal device, comprising:

a transceiver unit, configured to receive first indication information from a network device, wherein the first indication information indicates timing advance information; and
a processing unit, configured to perform the following operations based on a running state of at least one of the first time alignment timer and the second time alignment timer:
applying the first indication information or ignoring the first indication information.

25. The apparatus according to claim 24, wherein the first time alignment timer is for timing advance maintenance in a configured grant small data transmission procedure, or the first time alignment timer is for maintenance of a configured grant resource.

26. The apparatus according to claim 24 or 25, wherein the first time alignment timer is carried in a radio resource control release message, and the second time alignment timer is a timer configured in system information.

27. The apparatus according to any one of claims 24 to 26, wherein
the processing unit is further configured to update a second timing advance value to a first timing advance value, wherein the second timing advance value is a timing advance that is maintained by the terminal device before the terminal device receives the first indication information and that is for uplink transmission, and the first timing advance value is a timing advance that is determined by the terminal device based on the first indication information and that is for uplink transmission.

28. The apparatus according to any one of claims 24 to 27, wherein the processing unit is configured to apply the first indication information; and

the processing unit is further configured to: if contention resolution fails, update the first timing advance value to the second timing advance value, wherein the first timing advance value is the timing advance that is determined by the terminal device based on the first indication information and that is for uplink transmission, and the second timing advance value is the timing advance that is maintained by the terminal device before the terminal device receives the first indication information and that is for uplink transmission.

29. The apparatus according to claim 27 or 28, wherein the second time alignment timer is not running.

30. The apparatus according to claim 29, wherein that the second time alignment timer is not running comprises:

the first time alignment timer is not running and the second time alignment timer is not running; or
the first time alignment timer is running and the second time alignment timer is not running.

31. The apparatus according to claim 29 or 30, wherein the processing unit is configured to apply the first indication information; and
the processing unit is further configured to: if the first time alignment timer is running, restart the first time alignment timer.

32. The apparatus according to any one of claims 24 to 26, wherein the processing unit is further configured to:

when a first condition is met, if contention resolution succeeds, apply the first indication information, wherein
that a first condition is met comprises: the first time alignment timer is running and the second time alignment timer is not running, or the first time alignment timer is running and the second time alignment timer is running.

33. The apparatus according to claim 24, wherein the processing unit is further configured to:
when at least one of the first time alignment timer or the second time alignment timer is running, ignore the first indication information.

34. The apparatus according to claim 33, wherein that at least one of the first time alignment timer or the second time alignment timer is running comprises:
the first time alignment timer is running and the second time alignment timer is not running, the first time alignment timer is not running and the second time alignment timer is running, or the first time alignment timer is running and the second time alignment timer is running.

35. The apparatus according to claim 33 or 34, wherein the first time alignment timer is running and the second time alignment timer is not running, or the first time alignment timer is running and the second time alignment timer is running, and

the processing unit is further configured to: if contention resolution succeeds, apply the first indication information.

36. The apparatus according to any one of claims 24 to 35, wherein the processing unit is further configured to:

start or restart the second time alignment timer.

37. The apparatus according to any one of claims 24 to 36, wherein

the first indication information is carried in one of the following: a random access response message, a media access control control element, downlink control information, or a radio resource control release message.

38. A communication apparatus, used in a terminal device, comprising:

a transceiver unit, configured to receive a radio resource control RRC release message from a network device, wherein the RRC release message comprises configuration information of a configured grant CG resource for small data transmission SDT; and
a processing unit, configured to: control the terminal device to enter an RRC inactive state, and start the first time alignment timer; and
when the first time alignment timer expires, perform first behavior, wherein the first behavior comprises considering that a configured grant-based small data transmission CG-SDT procedure fails; and
the first time alignment timer is a timer for timing advance maintenance in the CG-SDT procedure.

39. The apparatus according to claim 38, wherein the first behavior further comprises at least one of the following:

stopping monitoring a physical downlink control channel;
stopping a second timer, wherein the second timer is a timer for PDCCH monitoring in the CG-SDT procedure; or
releasing the CG configured resource, and retaining a currently maintained timing advance TA value.

40. The apparatus according to claim 38 or 39, wherein the processing unit is further configured to: after considering that the CG-SDT procedure fails, control the terminal device to enter an RRC idle state.

41. The apparatus according to any one of claims 38 to 40, wherein the first time alignment timer expires after the terminal device sends a first uplink message; and

the first time alignment timer expires before the terminal device receives a response message to the first uplink message.

42. The apparatus according to any one of claims 38 to 41, wherein the processing unit is further configured to:

initiate the CG-SDT procedure by determining at least one of the following:

a total data amount of uplink data of the terminal device is less than a configured first threshold;
reference signal received power RSRP of the terminal device is greater than a configured second threshold;
the CG configured resource of the terminal device is valid;
a timing advance TA is valid; or
the first time alignment timer is running.

43. The apparatus according to claim 42, wherein the first condition further comprises: all the uplink data of the terminal device is data mapped to a radio bearer RB configured for the SDT, and the RB comprises a data radio bearer DRB and/or a signaling radio bearer SRB.

44. The apparatus according to claim 42 or 43, wherein the transceiver unit is specifically configured to:

send the first uplink message to the network device; and
receive the response message to the first uplink message from the network device.

45. The apparatus according to claim 44, wherein the response message to the first uplink message is one of the following:

an uplink resource scheduled by a network, a downlink assignment scheduled by the network, a downlink RRC message, or downlink control information DCI.

46. The apparatus according to any one of claims 38 to 45, wherein the RRC release message further comprises the first time alignment timer.

47. A communication apparatus, comprising:

a memory, configured to store a computer program; and
a processor, configured to execute the computer program stored in the memory, to enable the communication apparatus to perform the method performed by the terminal device according to any one of claims 1 to 23.

48. A communication apparatus, comprising:

a memory, configured to store a computer program; and
a processor, configured to execute the computer program stored in the memory, to enable the communication apparatus to perform the method performed by the network device according to any one of claims 1 to 23.

49. A computer-readable storage medium, wherein the computer-readable storage medium stores computer instructions, and when the computer instructions are run on a computer, the method according to any one of claims 1 to 23 is performed.

FIG. 1

FIG. 2

FIG. 3(a)

| Terminal device | | Network device |
| --- | --- | --- |

310: RRC message (including CG configuration information)

320: The terminal device enters an
inactive state

330: Determine that a condition is met,
and initiate a CG-SDT procedure

340: Uplink message #1 (including an RRC message and uplink
data #1)

350: Response message to the uplink message #1

360: Uplink grant

370: Uplink message #2 (including uplink data #2)

380: RRC release message, indicating to end the CG-SDT procedure

FIG. 3(b)

| Terminal device | | Network device |
|---|---|---|

410a: First indication information

420a: Perform the following operations based on a running state of at least one of a first time alignment timer and a second time alignment timer: applying the first indication information, or ignoring the first indication information

FIG. 4(a)

| Terminal device | | Network device |
|---|---|---|

410b: First uplink message

420b: Determine that a second timer expires, and perform the following behavior: first behavior or second behavior, where the second timer is for timing advance maintenance in a configured grant small data transmission procedure, or the second timer is for maintenance of a configured grant resource, and the first behavior includes at least one of the following: stopping monitoring a physical downlink control channel, considering that a configured grant-based small data transmission procedure fails, or stopping the second timer; and the second behavior includes monitoring the physical downlink control channel

FIG. 4(b)

| Terminal device | | Network device |
|---|---|---|

510: RRC release message (including CG configuration information)

520: The terminal device enters an RRC inactive state

530: The terminal device determines that a condition 1 is met, and initiates a CG-SDT procedure

**CG-SDT initial phase**

540: First uplink message (including an RRC message and first uplink data)

550: Response message

**CG-SDT subsequent transmission phase**

560: Random access preamble

561: Random access response (including a TAC)

562: The terminal device ignores the TAC in the RAR

563: Send Msg3

564: Contention resolution message

570: RRC release message

FIG. 5

```
Terminal device                                          Network device

     │  610: RRC release message (including CG configuration information)  │
     │◄──────────────────────────────────────────────────────────────────│
     │                                                                    │
┌────┴────────────────────────────────────────┐                          │
│ 620: The terminal device enters an RRC inactive                         │
│                   state                       │                         │
└────┬────────────────────────────────────────┘                          │
     │                                                                    │
┌────┴────────────────────────────────────────────┐                      │
│ 630: The terminal device determines that a condition 1 is               │
│      met, and initiates a CG-SDT procedure        │                     │
└────┬────────────────────────────────────────────┘                      │
```

CG-SDT initial phase

640: First uplink message

650: Response message

CG-SDT subsequent transmission phase

660: Random access preamble

661: Random access response (including a TAC)

662: The terminal device receives a random access response sent by the network device

663: Send Msg3

664: Contention resolution message

665: The terminal device updates a TA value #1 to a TA value #2 based on the TAC in the RAR

670: RRC release message

FIG. 6

```
┌─────────────────┐                                           ┌─────────────────┐
│ Terminal device │                                           │ Network device  │
└────────┬────────┘                                           └────────┬────────┘
         │    710: RRC release message (including CG configuration information)    │
         │◄───────────────────────────────────────────────────────────────────────│
         │                                                                         │
┌────────┴──────────────────────────────┐                                         │
│ 720: The terminal device enters an RRC │                                         │
│              inactive state            │                                         │
└────────┬──────────────────────────────┘                                         │
         │                                                                         │
┌────────┴──────────────────────────────┐                                         │
│ 730: The terminal device determines that│                                        │
│  a condition 1 is met, and initiates a  │                                        │
│            CG-SDT procedure             │                                        │
└────────┬──────────────────────────────┘                                         │
```

CG-SDT initial transmission phase

740: First uplink message (including an RRC message and first uplink data)

750: Response message

CG-SDT subsequent transmission phase

760: Random access preamble

761: Random access response (including a TAC)

762: The terminal device receives the random access response

763: The terminal device determines that a TAT is not running and a CG-SDT-TAT is running, and applies the TAC

764: Send Msg3

765: Contention resolution message

766: If the terminal device considers that contention resolution fails, the terminal device performs TA value backoff

770: RRC release message

FIG. 7

Terminal device

Network device

810: RRC release message (including CG configuration information)

820: The terminal device enters an RRC inactive state

830: The terminal device determines that a condition 1 is met, and initiates a CG-SDT procedure

CG-SDT initial transmission phase

840: First uplink message

850: The terminal device starts a CG-SDT-timer

860: Perform at least one of the following operations when a CG-SDT-TAT expires: stopping PDCCH monitoring, stopping the CG-SDT-timer, or considering that CG-SDT transmission fails

FIG. 8

Terminal device

Network device

910: RRC release message (including CG configuration information)

920: The terminal device enters an RRC inactive state

930: The terminal device determines that a condition 1 is met, and initiates a CG-SDT procedure

CG-SDT initial transmission phase

940: First uplink message

941: The terminal device starts a CG-SDT-timer

942: The terminal device determines that a CG-SDT-TAT expires, and the terminal device continues monitoring a PDCCH

943: Response message

TO
FIG. 9B

TO
FIG. 9B

FIG. 9A

CONT.
FROM
FIG. 9A

CONT.
FROM
FIG. 9A

CG-SDT
subsequent
transmission
phase

Case 1

950: TAC MAC CE

951: Apply the TAC MAC CE from
the network device

Case 2

960: Random access preamble

961: Random access response (including a TAC)

962: The terminal device updates a TA value for uplink
transmission to a TA 2 based on the TAC, and starts a TAT,
where the TAT is associated with the TAC

963: Send Msg3

964: Contention resolution message

970: RRC release message

FIG. 9B

FIG. 10

1100

Transceiver unit — 1110

Processing unit — 1120

FIG. 11

1200

Processor — 1210

Transceiver — 1230

Memory 1220 — 1220

FIG. 12

# EP 4 451 737 A1

<table>
<tr><td colspan="2"><strong>INTERNATIONAL SEARCH REPORT</strong></td><td>International application No.<br><br><strong>PCT/CN2022/137772</strong></td></tr>
</table>

**A. CLASSIFICATION OF SUBJECT MATTER**

H04W28/12(2009.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT; ENTXT; WPABS; 3GPP; CNKI: 小数据, 定时, 提前, 定时器, 配置授权, 超时, 到期, 非激活态, 释放, SDT, TA, TAT, time advance, CG, configured grant, alignment, timer, inactive, expiry, overtime, expire, inactive, release

**C. DOCUMENTS CONSIDERED TO BE RELEVANT**

| Category* | Citation of document, with indication, where appropriate, of the relevant passages | Relevant to claim No. |
|---|---|---|
| PX | WO 2022183356 A1 (GUANGDONG OPPO MOBILE TELECOMMUNICATIONS CORP., LTD.) 09 September 2022 (2022-09-09)<br>claims 1-54 | 1-49 |
| X | WO 2021213505 A1 (FG INNOVATION CO., LTD.) 28 October 2021 (2021-10-28)<br>description, paragraphs 0168-0174 | 1-49 |
| X | WO 2018133645 A1 (ZTE CORP.) 26 July 2018 (2018-07-26)<br>description, page 9, the fifth-to-last line to page 12, line 4 | 1-49 |
| A | WO 2021254147 A1 (HUAWEI TECHNOLOGIES CO., LTD.) 23 December 2021 (2021-12-23)<br>entire document | 1-49 |
| X | HUAWEI; HISILICON. ""R2-2110183 CG-based Schemes for SDT""<br>*3GPP tsg_ran\wg2_rl2*, 22 October 2021 (2021-10-22),<br>sections 2.3.2-2.3.3, 5.2, and 5.4.7.2 | 1-49 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 February 2023** | **22 February 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/137772**

| Patent document cited in search report | | | Publication date (day/month/year) | Patent family member(s) | | | Publication date (day/month/year) |
|---|---|---|---|---|---|---|---|
| WO | 2022183356 | A1 | 09 September 2022 | None | | | |
| WO | 2021213505 | A1 | 28 October 2021 | EP | 4122251 | A1 | 25 January 2023 |
| | | | | KR | 20230006497 | A | 10 January 2023 |
| | | | | US | 2021337625 | A1 | 28 October 2021 |
| | | | | US | 11202336 | B2 | 14 December 2021 |
| WO | 2018133645 | A1 | 26 July 2018 | None | | | |
| WO | 2021254147 | A1 | 23 December 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210005413